(19) Europäisches Patentamt
European Patent Office
Office européen des brevets

(11) **EP 3 385 038 A1**

(12) **EUROPEAN PATENT APPLICATION**

(43) Date of publication:
**10.10.2018 Bulletin 2018/41**

(51) Int Cl.:
***B25J 9/16*** (2006.01)

(21) Application number: **18162477.6**

(22) Date of filing: **19.03.2018**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(30) Priority: **05.04.2017 JP 2017075607** | (71) Applicant: **CANON KABUSHIKI KAISHA**<br>**Ohta-ku**<br>**Tokyo 146-8501 (JP)**<br><br>(72) Inventor: **NIWAYAMA, Yutaka**<br>**Tokyo, 146-8501 (JP)**<br><br>(74) Representative: **TBK**<br>**Bavariaring 4-6**<br>**80336 München (DE)** |

(54) **INFORMATION PROCESSING APPARATUS, INFORMATION PROCESSING METHOD, STORAGE MEDIUM, SYSTEM, AND ARTICLE MANUFACTURING METHOD**

(57)    An information processing apparatus determines possibility of gripping an object by a gripping unit, obtains first information, which is information about a position and orientation of the gripping unit with respect to a part of the object, taught to grip the part, second information, which is information about symmetry of the part, third information, which is information about a position and orientation of the object to be gripped by the gripping unit, and fourth information, which is information about vicinity objects in the vicinity of the object to be gripped by the gripping unit. The information processing apparatus includes a processing unit configured to make a determination, based on the first to fourth information, on the possibility with respect to a plurality of sets of position and orientation possible for the gripping unit to take with respect to the object to be gripped based on the symmetry.

FIG.1B

**Description**

BACKGROUND OF THE INVENTION

Field of the Invention

The present invention relates to an information processing apparatus, an information processing method, a storage medium, a system, and an article manufacturing method.

Description of the Related Art

A technique for identifying one of objects staked in bulk by using a vision system, measuring a position and orientation (hereinafter, also referred to as position-and-orientation) of the object, and gripping the object by a hand (gripping unit) attached to a robot in a production line of a plant has been developed in recent years. Since works stacked in bulk can take various orientations, the vision system determines the three-axis orientations as well as the positions of the works in a three-dimensional space. Based on what position-and-orientation the hand approaches and grips a recognized work is taught in advance. The hand is then operated based on the position and orientation of the work and the hand, whereby an object at an arbitrary position-and-orientation in the bulk is picked up. At that time, whether the hand can grip a position-and-orientation recognized work by a preset gripping method needs to be determined (gripping possibility determination). The reason is that the position-and-orientation of the hand to grip the work (gripping position-and-orientation) may be ones that the hand is unable to take in the three-dimensional space, or ones at which the hand interferes with an object other than the recognized work. Whether the hand at a gripping position-and-orientation set by a user can grip a work that can take various positions and orientations (sets of position and orientation) depends largely on the shape and the stacking state of the work.

In view of this, it is desirable that a bulk state similar to that in the production line may be previously created to perform from the recognition of the positions and orientations of works to the gripping possibility determination, and the gripping method may be examined for optimization of the gripping method in advance according to the result of the gripping possibility determination. To efficiently perform such an advance examination (work gripping test), there has been known a technique for displaying recognition results and gripping possibility determination results of works, on a screen.

As discussed in United States Patent Application Publication No. 2015/0142378, a method for displaying the direction of a degree of freedom by an arrow on the screen has been known as a technique for displaying information about a degree of freedom on the screen if an object has the degree of freedom with respect to the position-and-orientation of the hand.

SUMMARY OF THE INVENTION

According to a first aspect of the present invention, there is provided an information processing apparatus as specified in claims 1 to 13. According to a second aspect of the present invention, there is provided a system as specified in claim 14. According to a third aspect of the present invention, there is provided an information processing method as specified in clams 15 to 17. According to a fourth aspect of the present invention, there is provided a storage medium storing a program for causing a computer to perform an information processing method as specified in clam 18. According to a fifth aspect of the present invention, there is provided an article manufacturing method as specified in claim 19.

Further features of the present invention will become apparent from the following description of exemplary embodiments with reference to the attached drawings.

BRIEF DESCRIPTION OF THE DRAWINGS

Figs. 1A and 1B are block diagrams illustrating a concept of the present invention and an information processing apparatus according to a first exemplary embodiment.
Figs. 2A and 2B are diagrams illustrating a work model and a hand model according to the first exemplary embodiment.
Figs. 3A and 3B are diagrams for describing a rotational symmetry and a translational symmetry according to the first exemplary embodiment.
Fig. 4 is a diagram illustrating an example of a screen for inputting symmetry information according to the first exemplary embodiment.
Fig. 5 is a diagram for describing an example of a method for registering a relative gripping position-and-orientation according to the first exemplary embodiment.

Fig. 6 is a diagram illustrating an example of a freedom degree information presentation unit and a hand position-and-orientation specification unit according to the first exemplary embodiment.

Fig. 7 is a diagram illustrating an example of a work recognition test screen according to the first exemplary embodiment.

Fig. 8 is a flowchart illustrating a processing procedure according to the first exemplary embodiment.

Fig. 9 is a diagram for describing an example of a display method of the freedom degree information presentation unit according to the first exemplary embodiment.

Figs. 10A, 10B, and 10C are diagrams illustrating modifications of the freedom degree information presentation unit and the hand position-and-orientation specification unit according to the first exemplary embodiment.

Figs. 11A and 11B are diagrams illustrating a work model and a freedom degree information presentation unit according to a second exemplary embodiment.

Fig. 12 is a diagram illustrating an example of a screen for inputting symmetry information according to the second exemplary embodiment.

Fig. 13 is a flowchart illustrating a processing procedure according to the second exemplary embodiment.

Fig. 14 is a diagram illustrating an example of a freedom degree information presentation unit and a hand position-and-orientation specification unit according to a fourth exemplary embodiment.

Fig. 15 is a flowchart illustrating a processing procedure according to a modification of the fourth exemplary embodiment.

Fig. 16 is a diagram illustrating a work model according to a fifth exemplary embodiment.

Fig. 17 is a diagram illustrating an example of a freedom degree information presentation unit and a hand position-and-orientation specification unit according to a fifth exemplary embodiment.

Figs. 18A and 18B are diagrams illustrating a work model according to a sixth exemplary embodiment.

Fig. 19 is a flowchart illustrating a processing procedure according to the sixth exemplary embodiment.

Fig. 20 is a diagram illustrating an example of a screen for inputting symmetry information according to the sixth exemplary embodiment.

Fig. 21 is a diagram illustrating an example of a freedom degree information presentation unit and a hand position-and-orientation specification unit according to the sixth exemplary embodiment.

Figs. 22A and 22B are diagrams illustrating a work model according to a seventh exemplary embodiment.

Fig. 23 is a flowchart illustrating a processing procedure according to the seventh exemplary embodiment.

Fig. 24 is a diagram illustrating an example of a freedom degree information presentation unit and a hand position-and-orientation specification unit according to the seventh exemplary embodiment.

Fig. 25 is a block diagram illustrating a hardware configuration of an information processing apparatus according to an exemplary embodiment of the present invention.

Fig. 26 is a diagram illustrating a control system including a robot arm.

Fig. 27 is a diagram illustrating a conventional screen for checking work recognition results and gripping possibility determination results.

Fig. 28 is a diagram illustrating a teaching example of a gripping position-and-orientation of a hand.

DESCRIPTION OF THE EMBODIMENTS

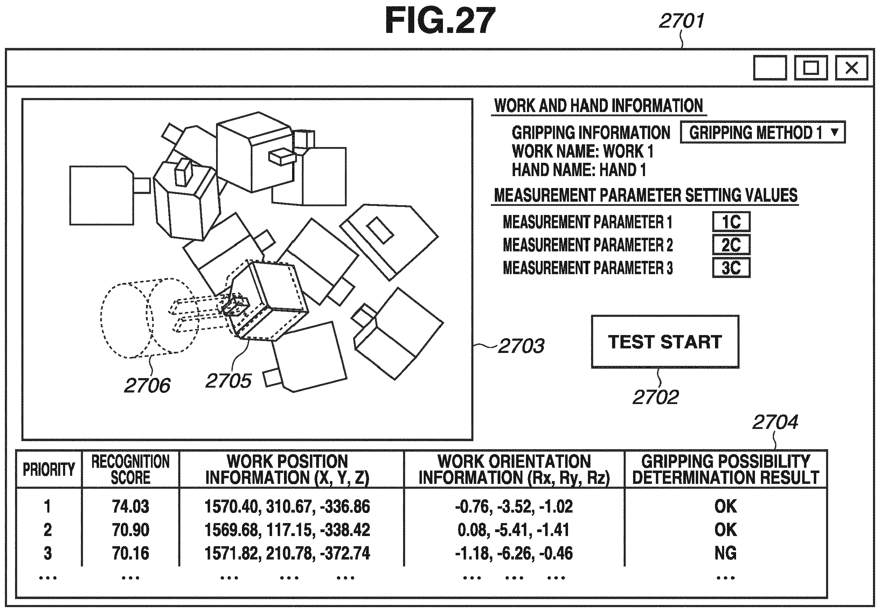

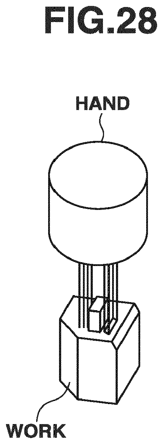

The user can improve the gripping method of the hand or the measurement condition of the works by referring to the information displayed on the screen. Fig. 27 illustrates an example of the screen display. Fig. 28 illustrates a teaching example of the gripping position-and-orientation of the hand (hand gripping position-and-orientation) with respect to a work. As a method for teaching a gripping position-and-orientation, a method of actually arranging a work and a robot in the measurement space and obtaining information about a recognition position-and-orientation of the work and information about the gripping position-and-orientation of the hand by driving of the robot in advance has been known.

Suppose that gripping position-and-orientations are taught in advance as illustrated in Fig. 28. The user checks the recognition results of the works and the gripping possibility determination results of the hand on a screen 2701 in Fig. 27. If the user sets various parameters relating to measurement and presses a test start button 2702 on the screen 2701, work recognition processing is performed. If the position-and-orientation of a work is identified, the gripping position-and-orientation of the hand is identified by using the gripping information (gripping position-and-orientation) taught in advance, and the gripping possibility determination is performed. The position-and-orientation of the work, the gripping position-and-orientation of the hand, and the gripping possibility determination result are displayed on a captured image 2703 in a superposed manner. The user can check which work is recognized and how the hand grips the work from a work shape model 2705 and a hand shape model 2706 displayed in a superposed manner. A recognition result list 2704 displays the position-and-orientations of respective recognized works and the gripping possibility determination results of the hand in order of evaluation values of position-and-orientation estimation of the works. The user can improve the gripping method and measurement parameters by referring to the contents displayed in the recognition result list 2704.

If an object to be gripped has a symmetrical shape, the appearance of the object remains unchanged even when the object is rotated or translated from the recognized orientation with respect to the axis of symmetry. For such an object, the gripping position-and-orientation of the hand with respect to the recognized orientation is not uniquely determined. Therefore, unlike Fig. 27, the gripping position-and-orientation of the hand is not able to be uniquely displayed with respect to each recognized orientation.

However, according to the method described in United States Patent Application Publication No. 2015/0142378, the direction of the degree of freedom is displayed but not information about whether the object can be gripped at each of a plurality of position-and-orientations of the gripping unit with respect to the degree of freedom. Thus, the user can learn that the position-and-orientation of the gripping unit have a degree of freedom, but not position-and-orientations at which the gripping unit is capable of gripping with respect to the degree of freedom. Embodiments of the present invention are directed to an information processing apparatus that is advantageous, for example, in determining whether the gripping unit can grip an object with respect to which the gripping unit has a degree of freedom in position-and-orientation when gripping the object.

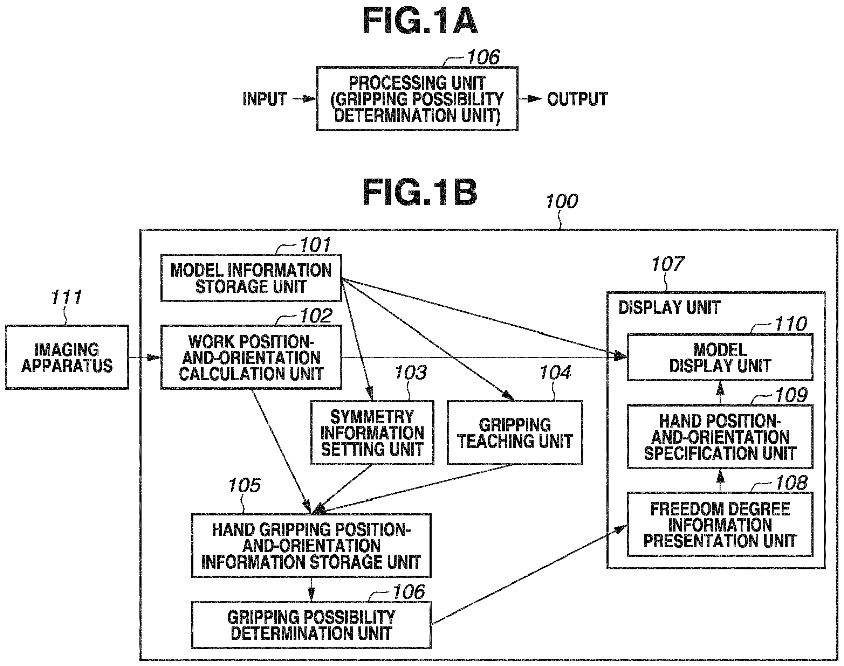

Fig. 1A illustrates a concept of an exemplary embodiment of the present invention. A processing unit for determining whether a gripping unit (hand) can grip an object (work) having a symmetrical shape at least in part determines gripping possibilities in a plurality of cases based on information about the object and the gripping unit. The information includes first information, second information, third information, and fourth information. The first information is information about a position-and-orientation of the gripping unit with respect to a part of the object. This information is taught to grip the part. The second information is information about the symmetry of the part. The third information is information about a position-and-orientation of the object to be gripped by the gripping unit. The fourth information is information about a layout (positions and orientations) of objects (vicinity objects) in the vicinity of the object to be gripped by the gripping unit. The plurality of cases corresponds to when there is a plurality of gripping orientations that the hand can take within a range where the hand has a degree of freedom. The plurality of cases relates to a plurality of position-and-orientations that the gripping unit can take, based on the symmetry, with respect to the object to be gripped by the gripping unit. Information about the symmetry of the object, information about the gripping position-and-orientation of the gripping unit, information about the object to be gripped, and information about the environment around the object to be gripped can be input to the processing unit as inputs. Determination results can be output to a display unit. An information processing apparatus that enables the user to easily check the results of gripping possibility determination and information about corresponding gripping position-and-orientations on the screen, for example, with respect to an object (work) having a shape such that the gripping position-and-orientation of the gripping unit (hand) have a degree of freedom, can thus be achieved

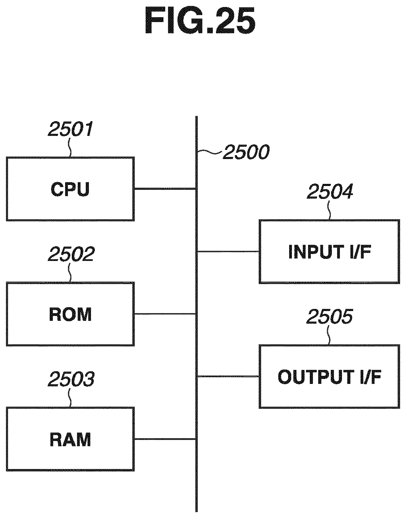

Exemplary embodiments of the present invention will be described in detail below with reference to the accompanying drawings. Before describing the exemplary embodiments according to the present exemplary embodiments, the hardware configuration for implementing an information processing apparatus to be described in each exemplary embodiment will be described with reference to Fig. 25. Fig. 25 is a hardware configuration diagram of the information processing apparatus. In Fig. 25, a central processing unit (CPU) 2501 controls devices connected via a bus 2500 in a centralized manner. Processing programs and device drivers according to each exemplary embodiment, including an operating system (OS), are stored in a read-only memory (ROM) 2302, and temporarily stored into a random access memory (RAM) 2503 and executed as appropriate by the CPU 2501. An input interface (I/F) 2504 inputs input signals in a format processable by the information processing apparatus from external apparatuses such as a sensor and a scanning device. An output I/F 2505 outputs an output signal in a format processable by an external apparatus such as a robot controller.

In a first exemplary embodiment, a method for obtaining and displaying gripping possibility determination results of a hand and hand gripping position-and-orientations with respect to a work including a shape (rotating body shape) having a rotational symmetry with a sufficiently large number of times of symmetry will be described. More specifically, a gripping possibility determination result at each rotation angle when a previously-taught hand gripping position-and-orientation is rotated about an axis of rotational symmetry is displayed on the screen by using information about the taught hand gripping position-and-orientation with respect to a part where the shape has the rotational symmetry in the work. A hand model is also displayed on the screen in a superposed manner, in an orientation corresponding to a rotation angle specified by the user.

Fig. 1B is a diagram illustrating the information processing apparatus 100 according to the first exemplary embodiment. As illustrated in Fig. 1B, the information processing apparatus 100 according to the present exemplary embodiment includes a model information storage unit 101, a work position-and-orientation calculation unit 102, a symmetry information setting unit 103, a gripping teaching unit 104, a hand gripping position-and-orientation information storage unit 105, a gripping possibility determination unit 106, and a display unit 107. In the following description, the hand gripping position-and-orientation information storage unit 105 will be referred to as a hand information storage unit 105. The display unit 107 further includes a freedom degree information presentation unit 108, a hand position-and-orientation specification unit 109, and a model display unit 110. The information processing apparatus 100 is connected to an imaging apparatus 111. However, the information processing apparatus 100 may be configured to integrally include the imaging apparatus 111.

The components of the information processing apparatus 100 will be described below.

The model information storage unit 101 stores a three-dimensional shape model of works stacked in bulk, and a three-dimensional shape model of a hand for holding a recognized work. For example, polygon models for expressing the three-dimensional shapes of the work and the hand by combinations of a plurality of polygons in an approximate manner may be used as the three-dimensional shape models. Each polygon includes a position (three-dimensional coordinates) on a surface and connection information about each point for constituting the polygon which approximates a face.

While polygons are usually constituted by triangles, rectangles or pentagons may be used. Any polygon models that can express an object shape in an approximate manner by three-dimensional coordinates of surface points and connection information about the points may be used. Like computer-aided design (CAD) data, a model called a boundary-representation (B-Rep) expression, which expresses a shape by a set of sectioned parametric curbed surfaces, may be used as a three-dimensional shape model. Any other model that can express the three-dimensional shapes of the work and the hand may be used.

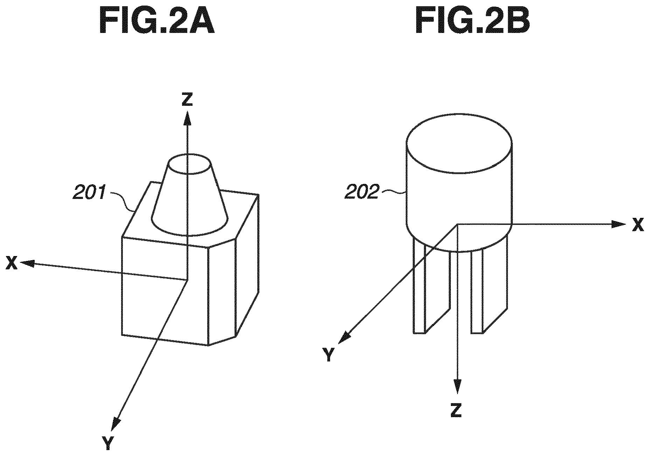

Suppose that a coordinate system (work coordinate system) with reference to its barycentric position is set for a work model in advance. Fig. 2A illustrates the model shape and the work coordinate system of a work 201 to be discussed in the present exemplary embodiment. Suppose also that a coordinate system (hand coordinate system) with reference to its barycentric position is set for a hand model in advance. Fig. 2B illustrates the model shape and the hand coordinate system of a hand 202 to be discussed in the present exemplary embodiment. The hand shape illustrated in Fig. 2B expresses the shape of a two-finger hand opened. A hand model suitable for gripping a work may be used according to the work shape. For example, if not a two- but three-finger open-close hand is used or a suction hand is used, a three-dimensional model according to the hand shape to be used may be input.

The model information storage unit 101 includes a memory or a hard disk. The model information storage unit 101 may obtain the work model and the hand model from a storage medium. The stored work model is input to the symmetry information setting unit 103, the gripping teaching unit 104, and the model display unit 110 in the display unit 107. The stored hand model is input to the gripping teaching unit 104 and the model display unit 110.

The work position-and-orientation calculation unit 102 detects a work from a large number of works stacked in bulk, and calculates the position-and-orientation of the detected work in a coordinate system (sensor coordinate system) of the imaging apparatus 111. In the present exemplary embodiment, the work position-and-orientation calculation unit 102 can obtain a distance image and a grayscale image from the imaging apparatus 111. The work position-and-orientation calculation unit 102 initially detects a work in the bulk and calculates a rough position-and-orientation of the work by performing voting on the obtained distance image and the grayscale image, using a previously-learned classification tree. The work position-and-orientation calculation unit 102 then calculates a precise position-and-orientation of the work from the calculated rough position-and-orientation by correcting the position-and-orientation so that the three-dimensional model of the work fits to the distance image and the grayscale image. However, other methods may be used as the method for calculating the position-and-orientation of the work in the sensor coordinate system. For example, the detection of a work at the preceding stage may include pattern matching with images observed in a large number of orientations. The calculation of the precise position-and-orientation at the subsequent stage may include fitting using only the distance image or only the grayscale image. Any other method that can find a work to be gripped in the bulk and calculate the position-and-orientation thereof may be used.

The work position-and-orientation calculation unit 102 can transform the calculated position-and-orientation of the work in the sensor coordinate system into a position-and-orientation of the work in a robot coordinate system by using "position-and-orientations between the imaging apparatus and a robot" determined in advance in calibration. The information about the position-and-orientation of the work, calculated by the work position-and-orientation calculation unit 102 is input to the hand information storage unit 105.

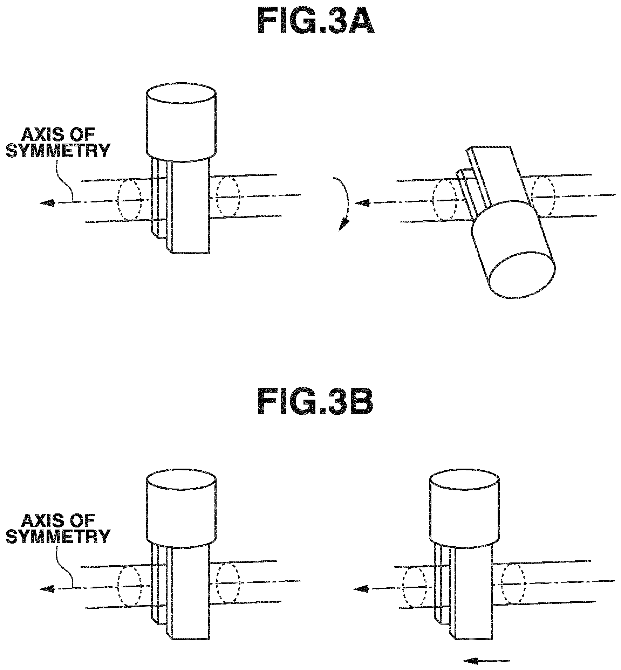

The symmetry information setting unit 103 sets information about the symmetry of the work shape. More specifically, with respect to the work model obtained from the model information storage unit 101, the symmetry information setting unit 103 sets information about an axis of symmetry of a part having a shape symmetry, information about an attribute of symmetry, information about the number of times of symmetry, and information about a range of shape symmetry. The information about the axis of symmetry includes a combination of three-dimensional coordinates indicating the origin of the axis and a three-dimensional vector indicating the direction of the axis. The attribute of symmetry refers to a rotational symmetry like being symmetrical in the direction of the solid-lined arrow illustrated in Fig. 3A, or a translational symmetry like being symmetrical in the direction of the solid-lined arrow illustrated in Fig. 3B. As employed herein, a rotational symmetry refers to such a relationship that the position-and-orientation of the work in a local area from the viewpoint of the hand appear the same even if a previously-set gripping position-and-orientation of the hand is rotated about the axis of symmetry. A translational symmetry refers to such a relationship that the position-and-orientation of the work in a local area from the viewpoint of the hand appear the same even if the previously-set gripping position-and-orientation of the hand is translated in a direction along the axis of symmetry.

The number of times of symmetry is a value determined by a rotation angle or a translation distance for which the symmetry with respect to the axis of symmetry is maintained. For example, a circular conical shape and a cylindrical shape are shapes rotationally symmetrical with respect to the axis of symmetry. These shapes have an infinite number of times of symmetry since works having such shapes do not change in appearance from the viewpoint of the hand even if minutely rotated about the axis of symmetry. On the other hand, a rectangular conical shape and a rectangular columnar shape are also rotationally symmetrical shapes, and coincide with themselves when rotated 360/N degrees (N is an integer of 2 or more). The number of times of symmetry of such shapes is N. The range of shape symmetry is information for specifying the area of symmetry if the work has a shape symmetrical in part. For example, in a case of a work having a rotationally symmetrical shape, the range of angles about the axis of symmetry is specified. In a case of a work having a translationally symmetrical shape, the range of lengths in the direction along the axis of symmetry is specified. The information (symmetry information) set by the symmetry information setting unit 103 is input to the hand information storage unit 105 along with work model information and hand model information.

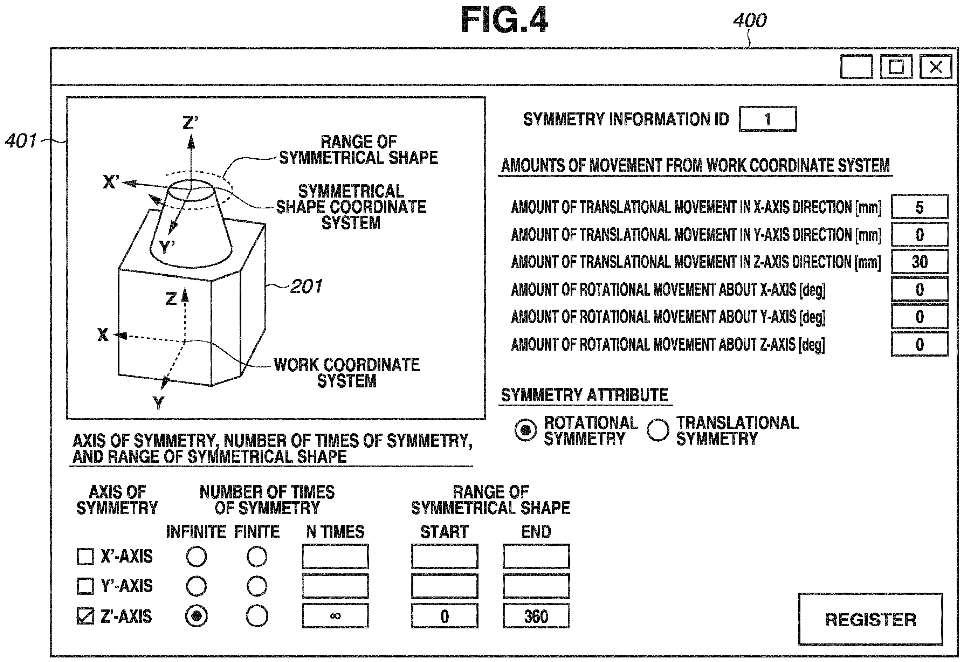

A method for setting the information about the axis of symmetry by the symmetry information setting unit 103 will be described. The symmetry information setting unit 103 initially displays the work model on a virtual three-dimensional space, and generates a coordinate system (symmetrical shape coordinate system) by translating or rotating the work coordinate system registered in the work model. The symmetry information setting unit 103 then registers one of the X-, Y-, and Z-axes of the symmetrical shape coordinate system as the axis of symmetry of the work. The generation of the symmetrical shape coordinate system is performed by user operations like giving information about the amount of movement from the work coordinate system by an operation unit (not illustrated) while observing the work model and the work coordinate system displayed in a not-illustrated graphical user interface (GUI). Fig. 4 illustrates an example of the GUI for setting the symmetry information. In Fig. 4, the symmetrical shape coordinate system can be set by specifying the amount of movement from the work coordinate system on the screen in terms of the amounts of translational movement and the amounts of rotational movement with respect to the respective X-, Y-, and Z-axes in the diagram. Such a GUI 400 can also be used to specify an axis to be registered as the axis of symmetry among X'-, Y'-, and Z'-axes of the set symmetrical shape coordinate system. Either a rotational symmetry or a translational symmetry can be selected as the attribute of symmetry. The number of times of symmetry on the selected axis of symmetry and the range of the symmetrical shape can also be specified. Either an infinite number of times or a finite number of times can be selected as the number of times of symmetry. If a finite number of times is selected, a specific number of times of symmetry can be input further.

A method for specifying the range of the symmetrical shape will be described. If the attribute of symmetry is a rotational symmetry, the range of rotation angles with reference to a specific angle about the axis of symmetry can be specified by a start angle and an end angle. If the attribute of symmetry is a translational symmetry, the range of lengths in the direction of the axis of symmetry can be specified by a start coordinate and an end coordinate on the axis of symmetry. If the user presses a registration button after the setting of the foregoing parameters, the symmetry information is registered. A unique identifier (ID) (symmetry information ID) is assigned to the symmetry information registered here. The symmetry information is managed in association with the symmetry information ID. The symmetry information ID can also be specified on the screen, and the user can assign an arbitrary symmetry information ID to the symmetry information to be registered. The number of axes of symmetry that can be registered with respect to one symmetrical shape coordinate system and the number of pieces of information to be associated with the axis/axes of symmetry are not limited to one each. Depending on the shape of the work, up to two axes of symmetry and up to two pieces of information can be set. For example, in Fig. 4, only the Z'-axis is set as the axis of symmetry. Depending on the shape of the work, the X'- or Y'-axis can be added. The number of times of symmetry and the range of the symmetrical shape can also be set for each axis of symmetry.

The GUI 400 illustrated in Fig. 4 can display the work model 201, the work coordinate system of the work model 201, the set symmetrical shape coordinate system, and the range of the symmetrical shape in a virtual three-dimensional space 401. The user can set the symmetry information while observing the displayed items. In Fig. 4, one symmetrical shape coordinate system is specified, and then the symmetry information to be associated with the symmetrical shape coordinate system is specified. However, the number of pieces of symmetry information that can be set is not limited to one, and a plurality of pieces of symmetry information may be set. In such a case, the user can register a plurality of pieces of symmetry information by once inputting required information and pressing the registration button, and then changing the symmetry information ID, making operations on the screen to change the information, and pressing the registration button. In the present exemplary embodiment, the method by which the user sets the symmetry information by inputting required information, using the dedicated screen for inputting the symmetry information, is described. However, it is not limited thereto. A data file containing the required information may be prepared in advance, and the symmetry information may be set by reading the data file. As another method for setting the axis of symmetry, the user may directly input and set the coordinates of the origin of the axis and the values of the vector components. The axis of symmetry may be any axis as long as the axis of symmetry can be identified in the work coordinate system. The information to be set as the axis of symmetry is not limited to the information about the origin of the axis of symmetry and the direction of the axis of symmetry. Two sets of three-dimensional coordinates may be set as a start point and an end point of an axis of symmetry vector.

In the present exemplary embodiment, the method for generating the symmetrical shape coordinate system by user operations is used. However, it is not limited thereto. The axis of symmetry may be directly estimated from shape information about the work model. For example, a work model including a set of trimmed curbed surfaces obtained by trimming analytic curbed surfaces having any of such attributes as a flat plane, a B-spline surface, a torus surface, a cylinder, a circular cone, and a circle by contour lines is used to calculate the axes of symmetry inherent to the respective analytic curbed surfaces. For example, if an analytic curbed surface is rotationally symmetrical, the inherent axis of symmetry refers to the center axis of rotation of the analytic curbed surface.

Next, for each of the axes of symmetry corresponding to the analytic curbed surfaces constituting the work model, a degree of similarly of distance to the start points of the other axes of symmetry and a degree of similarly of the direction of the axis are calculated. For example, suppose that the number of analytic curbed surfaces is M. Suppose also that the axis of symmetry of an analytic curbed surface $F_i$ ($i = 1$ to M) has a start point at three-dimensional coordinates $p_i$ in a model coordinate system, and the direction of the axis of symmetry is expressed by a three-dimensional vector $n_i$. For an analytic curbed surface $F_j$ ($j = 1$ to M) different from the analytic curbed surface $F_i$, the start point of the axis of symmetry in the model coordinate system is at three-dimensional coordinates $p_j$, and the direction of the axis of symmetry is expressed by a three-dimensional vector $n_j$. The distance between the start points of the two axes is $d_1$. The distance between the start point of the axis of symmetry of the analytic curbed surface $F_j$, projected on the axis of symmetry of the analytic curbed surface $F_i$, and the start point of the axis of symmetry of the analytic curbed surface $F_i$ is $d_2$. Then, a degree of similarly $\alpha_{ij}$ in distance can be defined as follows:

$$\alpha_{ij} = 1/|d_1 - d_2|,$$

where $d_1 = |p_j - p_i|$ and $d_2 = |(p_j - p_i) \cdot n_i|$. A degree of similarity $\beta_{ij}$ in direction between the axes of symmetry of the analytic curbed surfaces $F_i$ and $F_j$ can be defined as follows:

$$\beta_{ij} = |n_j \cdot n_i|.$$

Next, whether $\alpha_{ij}$ and $\beta_{ij}$ are greater than or equal to thresholds set in advance is determined. If $\alpha_{ij}$ and $\beta_{ij}$ are greater than or equal to the thresholds, the surface area $S_j$ of the analytic curbed surface $F_j$ is obtained. The total sum of such surfaces areas $S_j$ is calculated as an evaluation value $V_i$ of the analytic curbed surface $F_i$. This processing is repeated M times, and the axis of symmetry having the highest evaluation value Vi is extracted.

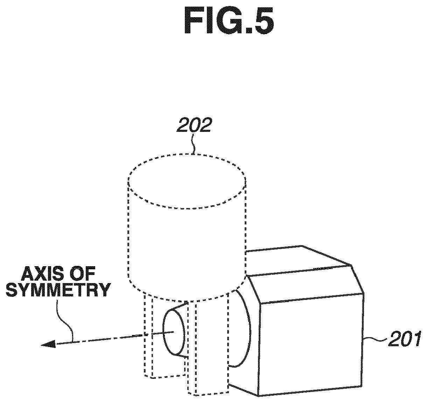

The gripping teaching unit 104 registers a relative position-and-orientation (relative gripping position-and-orientation) between the work and the hand in gripping the work, based on the work coordinate system of the work model and the hand coordinate system of the hand model stored in the model information storage unit 101. To register the relative gripping position-and-orientation, for example, as illustrated in Fig. 5, the work model 201 and the hand model 202 are operated in a virtual space and arranged to have a geometric relationship similar to that during gripping, and the relative position-and-orientation at that time is obtained. Alternatively, the position-and-orientation of a work arranged in a real environment may be recognized by a vision system. A robot arm is then moved to a position-and-orientation where the hand can grip the work, and the position-and-orientation of the hand at that time is obtained to calculate the relative position-and-orientation between the work and the hand. The relative gripping position-and-orientation may be registered by any other method that can determine the relative position-and-orientation between the work and the hand during gripping. Here, the number of pieces of gripping information to be registered at a time is one. Pieces of registered gripping information are assigned unique IDs (gripping IDs) and individually managed.

The hand information storage unit 105 calculates and stores information about hand gripping position-and-orientations in consideration of the symmetry of the shape of the work by using the input information about the position-and-orientation of the work, the information about the relative gripping position-and-orientation, and the symmetry information about the work. The hand gripping position-and-orientations calculated here do not have a one-to-one relationship with the position-and-orientation of the recognized work. For each gripping ID, gripping position-and-orientations as many as the number of times of symmetry are calculated with respect to the axis of symmetry. For example, suppose that the work has a rotationally symmetrical shape, the number of times of symmetry is N, and the range of the symmetrical shape is 360 degrees about the axis of symmetry. In such a case, position-and-orientations rotated about the axis of symmetry in steps of 360/N degrees are calculated with respect to a hand gripping position-and-orientation (reference gripping position-and-orientation) obtained from the position-and-orientation of the work and the gripping information. The total number of position-and-orientations to be calculated, including the reference gripping position-and-orientation, is N. The calculated gripping position-and-orientations are registered in association with the information about the axis of symmetry in the symmetry information.

The gripping possibility determination unit 106 performs processing for determining whether gripping is possible, with respect to each hand gripping position-and-orientation (case) input from the hand information storage unit 105. Examples of the criteria for determining whether gripping is possible include constraints on the orientation of the hand in a three-dimensional space and the presence or absence of interference between the hand and an object other than the recognized work. The determination result of the gripping possibility determination unit 106 is stored in association with the hand gripping position-and-orientation used for the determination on a one-to-one basis.

According to information input from the freedom degree information presentation unit 108 or the hand position-and-orientation specification unit 109 in the display unit 107, the gripping possibility determination unit 106 can also perform the gripping possibility determination only on some of all gripping position-and-orientations calculated by the hand information storage unit 105.

The display unit 107 displays the work model and the hand model on the screen in a superposed manner. As for the degree of freedom of the hand gripping position-and-orientation, the display unit 107 displays the range of the degree of freedom and gripping possibility determination results with respect to a parameter of the degree of freedom. The display unit 107 further specifies the position-and-orientation of the hand model to be displayed in a superposed manner. Such functions of the display unit 107 are implemented by the freedom degree information presentation unit 108, the hand position-and-orientation specification unit 109, and the model display unit 110 included in the display unit 107.

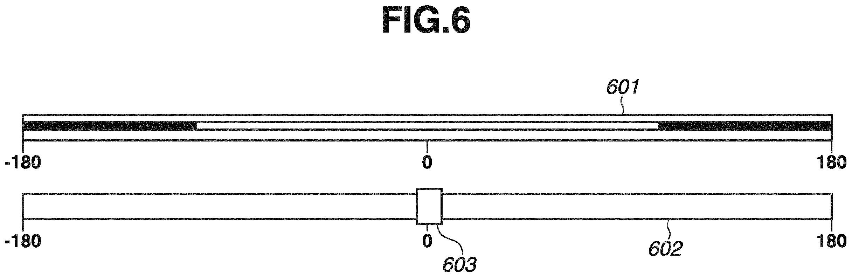

Concerning the degree of freedom of the hand gripping position-and-orientation occurring from the symmetry of the shape of the work, the freedom degree information presentation unit 108 displays the range of the degree of freedom and the gripping possibility determination results with respect to the parameter of the degree of freedom on the screen. More specifically, the freedom degree information presentation unit 108 displays, by using a single indicator, the information about the range of symmetry and the gripping possibility determination results at gripping position-and-orientations calculated within the range of symmetry in the symmetry information. Fig. 6 illustrates an example of a degree of freedom presentation indicator in a case where the work is rotationally symmetrical, the number of times of symmetry is infinite, and the range of symmetry is 360 degrees. In Fig. 6, the degree of freedom of the hand gripping position-and-orientation is expressed by a one-dimensional indicator 601 in the range of -180 to 180 degrees with 0 degrees as a reference for the rotational angle about the axis of symmetry. The indicator 601 internally expresses the gripping possibility determination result at each rotation angle by using colors corresponding to respective cases where gripping is possible and where gripping is not possible (in Fig. 6, the former is expressed in white, and the latter in black). Using the indicator 601, the user can easily find out the range in which the hand gripping position-and-orientation have the degree of freedom in the registered gripping information, and the gripping possibility determination results at the respective gripping position-and-orientations. The gripping possibility determination results are not limited to the expression in different colors, and may be expressed by a two-dimensional graph. For example, the gripping possibility determination results may be expressed by associating the values of the horizontal axis with rotation angles, and the values of the vertical axis with gripping possibility determination results (expression in two values 1 and 0).

The freedom degree information presentation unit 108 can select position-and-orientations to perform the gripping possibility determination among the gripping position-and-orientations calculated by the hand information storage unit 105. For example, if a work is symmetrical with an infinite number of times of symmetry, the degree of information presentation unit 108 may limit the number of times of symmetry by using an approximate value. In such a case, the information about the gripping position-and-orientations selected by the freedom degree information presentation unit 108 is transmitted to the gripping possibility determination unit 106.

The hand position-and-orientation specification unit 109 specifies the gripping position-and-orientation of the hand model to be displayed on the model display unit 110 by specifying the parameter about the degree of freedom of the gripping position-and-orientation of the hand, presented by the freedom degree information presentation unit 108. Fig. 6 illustrates an indicator 602 for specifying the gripping position-and-orientation of the hand to be displayed. Like the indicator 601, the indicator 602 one-dimensionally expresses the rotation angle about the axis of symmetry. A gripping position-and-orientation corresponding to a rotation angle about the axis of symmetry, expressed by the indicator 601 can be specified by horizontally moving a slider 603 serving as a movable portion. The gripping position-and-orientation of the hand to be specified can be changed at arbitrary timing. In Fig. 6, the hand position-and-orientation specification unit 109 provides an indicator different from that of the freedom degree information presentation unit 108. However, both the functions may be combined and expressed as one indicator. For example, the indicator 601 may include the slider 603 of the indicator 602.

If the gripping position-and-orientation of the hand have two or more degrees of freedom, the hand position-and-orientation specification unit 109 can select gripping position-and-orientations dependent on the specified parameter.

In such a case, the information about the gripping position-and-orientations selected by the hand position-and-orientation specification unit 109 is transmitted to the gripping possibility determination unit 106.

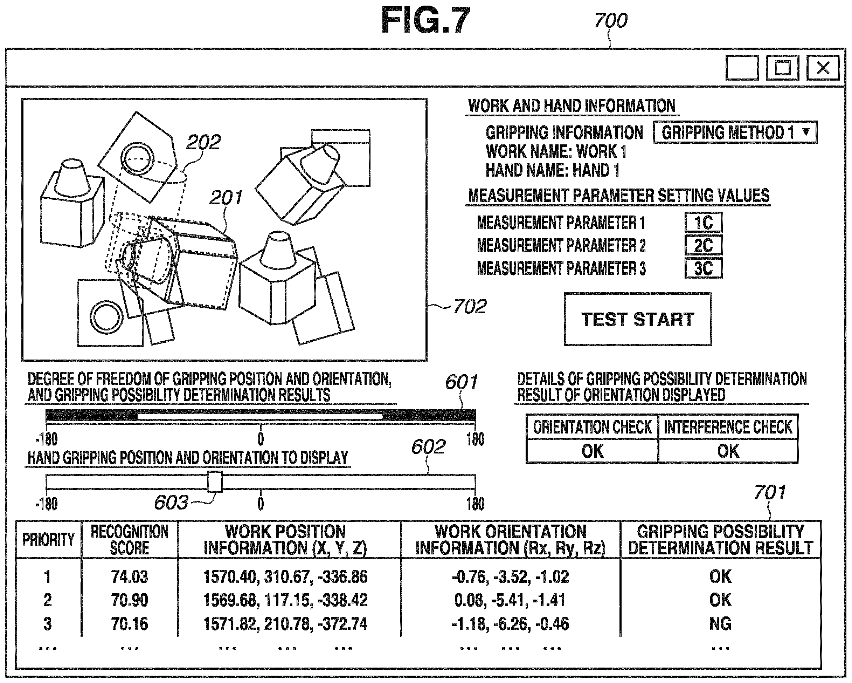

The model display unit 110 displays the work model at the position-and-orientation of the recognized work in a superposed manner and displays the hand model at the gripping position-and-orientation of the hand, specified by the hand position-and-orientation specification unit 109, in a superposed manner on the screen. Fig. 7 illustrates an example of a captured image display screen 702, which is a third display portion, in a work recognition test screen 700. The work recognition test screen 700 is a display unit used for a work recognition test. If the user sets parameters about work measurement and presses a test start button on the work recognition test screen 700, a series of processes from the imaging of works stacked in bulk to the gripping possibility determination is performed. A recognition result list 701, which is a first display portion, displays the position-and-orientations of respective works recognized and the gripping detection determination results of the hand in order of the evaluation values of position-and-orientation estimation of the works. If the user specifies one of the rows of the results displayed in the recognition result list 701, the recognition result corresponding to the specified work is reflected on the captured image display screen 702. In the captured image display screen 702, the work model 201 is displayed at the position-and-orientation of the work specified in the recognition result list 701 in a superposed manner. The captured image display screen 702 further includes an indicator 602 that is a second display portion. The indicator 602 displays the hand model at the specified gripping position-and-orientation of the hand in a superposed manner.

The color of the displayed hand model here may reflect the gripping possibility determination results displayed on the indicator 601, which is a first display portion. The user selects the position-and-orientation of the work to be displayed from the recognition result list 701 and specifies the gripping position-and-orientation of the hand to be displayed. By making such operations, the user can easily check which position-and-orientation the work is recognized at, what degree of freedom the position-and-orientation of the hand to grip the work have, and what the gripping possibility determination result at the assumed gripping position-and-orientation is like. Since the gripping possibility determination result varies with the position-and-orientation of the work, the user can check the gripping possibility determination result of each work by switching the selection of the rows displayed in the recognition result list 701. The user can determine whether the set hand gripping method is suitable enough to grip works in the bulk, by checking the gripping possibility determination results of the hand gripping position-and-orientations of works at various position-and-orientations. If the user horizontally moves the slider 603 on the indicator 602, the rotation angle about the new axis of symmetry specified by the slider 603 is reflected on the orientation of the hand model 202 displayed in the captured image display screen 702. In other words, as the slider 603 is moved, the orientation of the hand model 202 in the captured image display screen 702 appears to be switched. The gripping possibility determination result at the gripping position-and-orientation selected by the slider 603 is also displayed, and the user can check the details of the gripping possibility determination result.

The imaging apparatus 111 is a sensor for obtaining measurement information required to recognize the position-and-orientation of a work. For example, the imaging apparatus 111 may be a camera for capturing a two-dimensional image or a distance sensor for capturing a distance image in which each pixel has depth information. Both the camera and the distance sensor may be used. The distance sensor may use a method that includes capturing, by a camera, reflected light of laser light or slit light with which an object is irradiated, and measuring a distance by triangulation. A time-of-flight method using the time of flight of light may be used. A method for calculating a distance by triangulation from images captured by a stereo camera may be used. Any other sensor that can obtain information required to recognize the position-and-orientation of a work may be used. The imaging apparatus 111 may be fixed to above or beside the work. The imaging apparatus 111 may be provided on a robot hand. In the present exemplary embodiment, a sensor capable of obtaining both a distance image and a grayscale image is used. As described above, the measurement information obtained by the imaging apparatus 111 is input to the work position-and-orientation calculation unit 102.

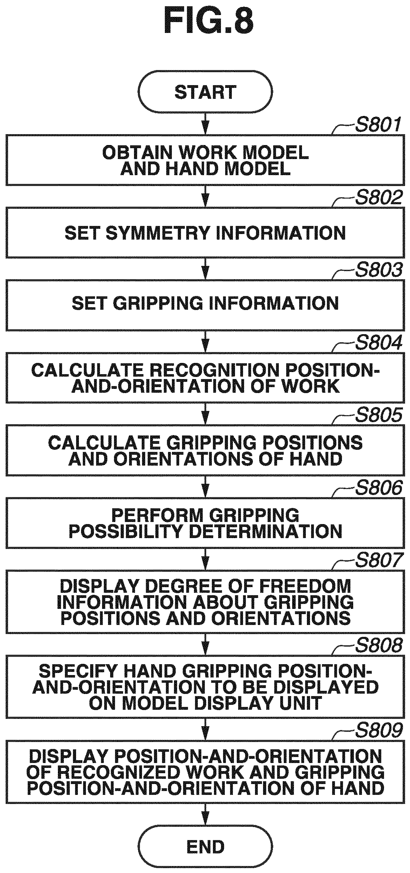

Fig. 8 is a flowchart illustrating a processing procedure for calculating information required for the work recognition test screen 700 according to the present exemplary embodiment.

In step S801, the model information storage unit 101 obtains and stores the work model and the hand model.

In step S802, the symmetry information setting unit 103 sets symmetry information about the shape of the work based on input information about the work model. The symmetry information set in step S802 includes the information about the axis of symmetry, the information about the attribute of symmetry, the information about the number of times of symmetry, and the information about the range of shape symmetry. Like the work 201, if a shape classified to have an infinite number of times of symmetry is included, the number of times of symmetry is desirably set to be as large as possible within a range processable by the information processing apparatus 100. If the performance of the information processing apparatus 100 imposes a non-negligible constraint on the number of times of symmetry, the number of times of symmetry may be approximated and set to a finite value. Like the work 201, if a rotationally symmetrical shape is included, an angular difference $\Delta\theta$ such that a difference occurring in the gripping position-and-orientation of the hand due to a minute difference in the rotation angle about the axis of symmetry will not affect the gripping possibility determination result to be described below is set in advance. The angular difference $\Delta\theta$ can be used to calculate a number of times of symmetry N = 360/Δθ in an approximate manner if the work 201 has a shape symmetry in the range of 360 degrees in the rotation angle about the axis of symmetry. Hereinafter, the number of times of symmetry of the work 201 is described to be approximated and set by a selection unit to N expressed in the foregoing equation, using a degree of discreteness.

In step S803, the gripping teaching unit 104 sets six degree of freedom parameters expressing the relative position-and-orientation between the work and the hand based on the input information about the work model and the hand model. A 3×3 rotation matrix for performing an orientation transformation from the work coordinate system to the hand coordinate system and a 3-column translation vector for performing a position transformation will be denoted by $R_{WH}$ and $t_{WH}$, respectively. Using a 4×4 matrix $T_{WH}$, a transformation from a work coordinate system $X_W = [X_W, Y_W, Z_W]^T$ to a hand coordinate system $X_H = [X_H, Y_H, Z_H]^T$ can be expressed as follows:

$$X_W' = [X_W, Y_W, Z_W, 1]^T,$$

$$X_H' = [X_H, Y_H, Z_H, 1]^T,$$

and

$$T_{WH} = \begin{bmatrix} R_{WH} & t_{WH} \\ 0^T & 1 \end{bmatrix} \qquad \cdots \text{Eq. 1}$$

Hereinafter, $T_{WH}$ may sometimes be referred to as a relative gripping position-and-orientation, $R_{WH}$ a relative gripping orientation, and $t_{WH}$ a relative gripping position.

As described above, the number of pieces of gripping information to be registered at a time is one. The gripping information includes information about the relative position-and-orientation of the work and the hand during gripping. A gripping ID is assigned to the gripping information registered at a time. In step S803, the number of times the processing for registering gripping information is performed is not limited to one. Gripping information may be registered a plurality of times while changing the relative position-and-orientation between the work and the hand. In such a case, unique gripping IDs are assigned to the respective registered pieces of gripping information.

In step S804, the work position-and-orientation calculation unit 102 detects a work in a large number of works stacked in bulk, with the information obtained by the imaging apparatus 111 as an input. At the same time, the work position-and-orientation calculation unit 102 calculates six parameters expressing the position-and-orientation of the detected work in the robot coordinate system. In a coordinate transformation from the robot coordinate system based on the six parameters calculated here to the work coordinate system, a 3×3 rotation matrix expressed by three parameters for expressing an orientation will be denoted by $R_{RW}$, and a 3-column translation vector expressed by three parameters for expressing a position by $t_{RW}$. Using a 4×4 matrix $T_{RW}$, a transformation from a robot coordinate system $X_R = [X_R, Y_R, Z_R]^T$ to the work coordinate system $X_W = [X_W, Y_W, Z_W]^T$ can be expressed as follows:

$$X_W' = T_{RW} X_R',$$

where $X_W' = [X_W, Y_W, Z_W, 1]^T$, $X_R' = [X_R, Y_R, Z_R, 1]^T$, and

$$T_{RW} = \begin{bmatrix} R_{RW} & t_{RW} \\ 0^T & 1 \end{bmatrix} \qquad \cdots \text{Eq. 2}$$

Hereinafter, $T_{RW}$ may be sometimes referred to as a recognition position-and-orientation, $R_{RW}$ a recognition orientation, and $t_{RW}$ a recognition position.

In step S805, the hand information storage unit 105 performs the following calculation. That is, the hand information storage unit 105 calculates gripping positions and positions of the hand in consideration of the symmetry of the work shape by using the symmetry information about the work shape set in step S802, the information about the relative gripping position-and-orientation of the hand set in step S803, and the information about the recognition position-and-orientation of the work calculated in step S804 as inputs.

The hand information storage unit 105 initially calculates a position-and-orientation (reference gripping position-and-orientation) at which the hand performs gripping while satisfying the relationship of the relative gripping position-and-orientation, with respect to the recognized position-and-orientation of the work. A 4×4 matrix expressing the reference gripping position-and-orientation will be denoted by $T_{RH}$. $T_{RH}$ can be calculated as follows:

$$T_{RH} = T_{RW}T_{WH}.$$

$T_{RH}$ is expressed as follows:

$$T_{RH} = \begin{bmatrix} R_{RH} & t_{RH} \\ 0^T & 1 \end{bmatrix}, \quad \ldots \text{Eq. 3}$$

where $R_{RH}$ is a 3×3 rotation matrix, and $t_{RH}$ is a 3-column translation vector.

Hereinafter, $t_{RH}$ may be referred to as a reference gripping position of the hand, and $R_{RH}$ a reference gripping orientation of the hand.

Next, the hand information storage unit 105 calculates a gripping position-and-orientation in consideration of the symmetry of the shape of the work based on the reference gripping position-and-orientation of the hand. More specifically, the hand information storage unit 105 determines an orientation symmetrical with respect to the axis of symmetry of the work to be gripped by the hand at the reference gripping positon and orientation. Using a 4×4 matrix $T_{WS}$, a transformation from the work coordinate system $X_W = [X_W, Y_W, Z_W]^T$ to a symmetrical shape coordinate system $X_S = [X_S, Y_S, Z_S]^T$ set in step S802 is expressed as follows:

$$X_S' = T_{WS}X_W',$$

where $X_S' = [X_S, Y_S, Z_S, 1]^T$, $X_W' = [X_W, Y_W, Z_W, 1]^T$, and

$$T_{WS} = \begin{bmatrix} R_{WS} & t_{WS} \\ 0^T & 1 \end{bmatrix}. \quad \ldots \text{Eq. 4}$$

Using a 4×4 matrix $T_{SH}$, a transformation from the symmetrical shape coordinate system to the hand coordinate system can be expressed as follows:

$$T_{SH} = T_{WS}^{-1}T_{WH}.$$

$T_{SH}$ is expressed as follows:

$$T_{SH} = \begin{bmatrix} R_{SH} & t_{SH} \\ 0^T & 1 \end{bmatrix}, \quad \ldots \text{Eq. 5}$$

where $R_{SH}$ is a 3×3 rotation matrix, and $t_{SH}$ is a 3-column translation vector.

Using a 4×4 matrix $T_{RS}$, the position-and-orientation of the work in the symmetrical shape coordinate system can be expressed as follows:

$$T_{RS} = T_{RW} T_{WS}.$$

$T_{RS}$ is expressed as follows:

$$T_{RS} = \begin{bmatrix} R_{RS} & t_{RS} \\ 0^T & 1 \end{bmatrix} , \quad \ldots \text{Eq. 6}$$

where $R_{RS}$ is a 3×3 rotation matrix, and $t_{RS}$ is a 3-column translation vector.

Here, the foregoing $T_{RH}$ can also be expressed by using $T_{RS}$ and $T_{SH}$ as follows:

$$T_{RH} = T_{RS} T_{SH}.$$

Like the work 201, if a work has a rotationally symmetrical shape and the number of times of symmetry can be expressed by N = 360/Δθ, the hand information storage unit 105 initially determines an orientation (rotated orientation) by rotating the recognition orientation $R_{RS}$ in the symmetrical shape coordinate system by Δθ × i about the axis of symmetry. Here, i is an integer of 1 to (N - 1). Next, as a gripping orientation for gripping the work in the rotated orientation, the hand information storage unit 105 determines an orientation (symmetrical gripping orientation) $R_{RH\_i}$ of the hand in the relationship of the reference gripping position-and-orientation with respect to the rotated orientation. The symmetrical gripping position $R_{RH\_i}$ can be calculated by using the following equation:

$$R_{RH\_i} = R_{RS} R_i R_{SH},$$

where Ri is a 3×3 rotation matrix for making a rotation by Δθ × i about the axis of symmetry. The gripping position-and-orientation (symmetrical gripping position-and-orientation) of the hand rotated Δθ × i about the axis of symmetry of the work can thus be expressed as follows:

$$T_{RH\_i} = \begin{bmatrix} R_{RH\_i} & t_{RH} \\ 0^T & 1 \end{bmatrix} . \quad \ldots \text{Eq. 7}$$

In step S805, the hand information storage unit 105 repeats the processing for calculating the symmetrical gripping position-and-orientation for i of 1 to (N - 1) in value, i.e., a total of (N - 1) times. That is, a total of (N - 1) symmetrical gripping position-and-orientations are calculated.

In step S806, the gripping possibility determination unit 106 determines whether the work can be gripped, at all the hand gripping position-and-orientations calculated in step S805. More specifically, the gripping possibility determination unit 106 performs the gripping possibility determination on the reference gripping position-and-orientation and the symmetrical gripping position-and-orientations of the hand. As described above, examples of the criteria for determining gripping possibility include constraints on the orientation of the hand in the three-dimensional space, and the presence or absence of interference between the hand and its surrounding objects (pallet, adjoining works) other than the recognized work. For example, the constraints on the gripping position-and-orientation of the hand are determined from an angle formed between the Z-axis of the hand coordinate system at a position-and-orientation targeted for the determination and the Z-axis of the hand coordinate system at the reference position-and-orientation of the hand. If the angle is greater than or equal to a predetermined value, gripping is determined to be impossible due to an unfeasible orientation. If the angle is smaller than the predetermined value, gripping is determined to be possible. Alternatively, whether the robot can be controlled to the gripping position may be determined by using a robot controller, and gripping possibility may be determined based on the result thereof. The presence or absence of interference is determined, for example, by virtually reproducing the three-dimensional space including the works stacked in bulk and the pallet based on the recognition results of the works, and determining whether the hand at the gripping position interferes with the surrounding objects. If interference occurs, gripping is determined not to be possible. If no interference occurs, gripping is determined to be possible. Based on such determinations, the gripping position-and-orientation is determined to be capable of gripping if gripping is determined to be possible by all the criteria. If gripping is determined not to be possible by any one of the criteria, the gripping position-and-orientation is determined not to be capable of gripping.

In step S807, concerning the degree of freedom of the hand gripping position-and-orientation occurring from the shape symmetry of the work, the freedom degree information presentation unit 108 displays on the screen the range of the degree of freedom and the gripping possibility determination results with respect to the parameter of the degree of freedom. Like the work 201, if a work is rotationally symmetrical, the number of times of symmetry is infinite, and the range of the shape symmetry is 360 degrees about the axis of symmetry, then the freedom degree information presentation unit 108 continuously displays the gripping possibility determination results with respect to the hand gripping position-and-orientations at which the gripping possibility determination is performed within the range of 360 degrees. In the case of the work 201, the gripping position-and-orientations at which the gripping possibility determination is performed and the rotation angles about the axis of symmetry have a one-to-one relationship. The gripping capability detection results can thus be reflected on the one-dimensionally expressed rotation angles about the axis of symmetry, like the indicator 601 in Fig. 6. Since the number of times of symmetry of the work 201 can be approximated by $N = 360/\Delta\theta$, N gripping possibility determination results are reflected. While the symmetrical gripping position-and-orientations in fact are position-and-orientations discretely calculated at angles of $\Delta\theta$ about the axis of symmetry, the gripping possibility determination results may be continuously displayed on the indicator 601.

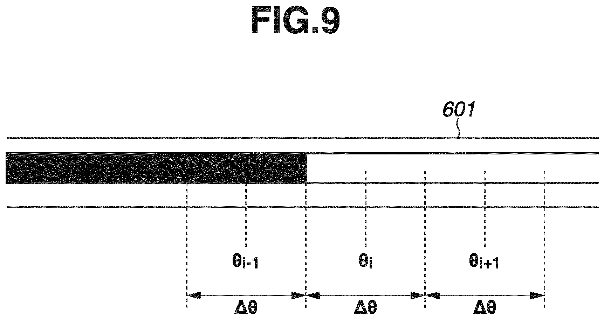

For example, as illustrated in Fig. 9, the gripping possibility determination result at a symmetrical gripping position-and-orientation corresponding to $\theta_i = \Delta\theta \times i$ among the angles about the axis of symmetry to be expressed on the indicator 601 is reflected as follows: The gripping possibility determination result within the range of $\Delta\theta$ with $\theta_i$ at the center is assumed to be the same as that at $\theta_i$, and so reflected on the indicator 601. For $\theta_{i+1}$, which is an angle rotated by $\Delta\theta$ from $\theta_i$ about the axis of symmetry, the gripping possibility determination result is similarly reflected. In such a manner, the gripping possibility determination results are continuously expressed on the indicator 601 with respect to the rotation angle about the axis of symmetry. Suppose that the gripping possibility determination result at $\theta_{i-1}$ which is an angle rotated by $-\Delta\theta$ from $\theta_i$ about the axis of symmetry is different from that at $\theta_i$. In such a case, the gripping possibility determination results are expressed on the indicator 601 as if switched at the intermediate rotation angle between $\theta_i$ and $\theta_{i-1}$. The rotation angle at a symmetrical gripping position-and-orientation does not necessarily need to come to the center of the range of rotation angles within which the gripping possibility determination result is assumed to be the same as that at the symmetrical gripping position-and-orientation.

In other words, any range of $\Delta\theta$ including the rotation angle at the symmetrical gripping position-and-orientation may be used. The rotation angles about the axis of symmetry may be displayed on the indicator 601. For example, the symmetrical gripping position-and-orientations may be distributed and displayed over rotation angles of 180 degrees in the positive direction and 180 degrees in the negative direction with reference to the rotation angle at the initial position-and-orientation of the hand among the gripping positions and orientation calculated in step S805. As another method for determining the reference of the rotation angles, the rotation angle at a gripping position-and-orientation where the angle formed between the Z-axis of the hand coordinate system at the hand gripping position-and-orientation calculated in step S805 and the Z-axis of the hand coordinate system at the reference gripping position-and-orientation of the hand is the smallest may be used as the reference. The rotation angle serving as the reference may be 0 degrees. If the range of rotation angles is 360 degrees, an intermediate rotation angle of 180 degrees may be used as the reference.

In step S808, the hand position-and-orientation specification unit 109 specifies, according to the user's operations, the hand gripping position-and-orientation to be displayed on the model display unit 110 among the hand gripping position-and-orientations presented to the user by the freedom degree information presentation unit 108. In the case of the work 201, the gripping position-and-orientation of the hand to be displayed can be specified by specifying the rotation angle about the axis of symmetry. Position-and-orientations that the hand position-and-orientation specification unit 109 can specify are the gripping position-and-orientations calculated in step S805. Rotation angles as many as the number of times of symmetry $N = 360/\Delta\theta$ can thus be specified.

In step S809, the display unit 107 displays the hand gripping position-and-orientation specified in step S808 and the position-and-orientation of the recognized work on the screen in a superposed manner.

In the first exemplary embodiment, a method for displaying the gripping possibility detection results of the hand and the gripping position-and-orientations of the hand with respect to a work including a rotationally symmetrical shape (rotating body shape) with an infinite number of times of symmetry has been described. By using such a method, the user can easily check which position-and-orientations are capable of gripping among possible gripping position-and-orientations of the hand with respect to a work having a shape symmetry. If there are not many position-and-orientations capable of gripping by the set gripping method, the user can optimize the gripping method by performing a series of operations including setting a gripping method again, doing a work recognition test, and checking gripping possibility determination results.

<Modification 1>

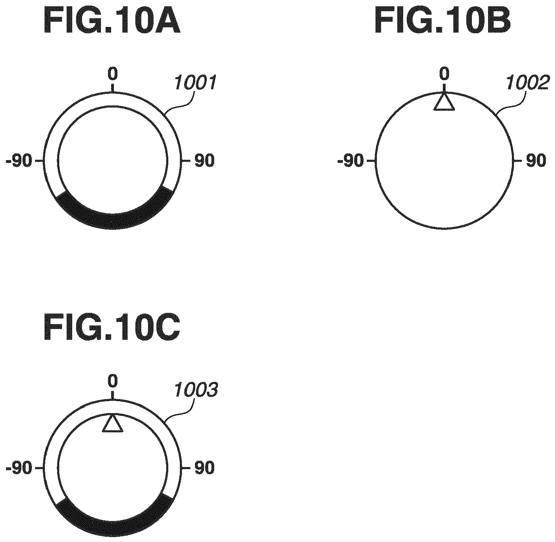

In the first exemplary embodiment, the freedom degree information presentation unit 108 uses the indicator 601 which one-dimensionally expresses the rotation angle about the axis of symmetry. As a modification, an indicator 1001 for expressing the rotation angle on a circumference as illustrated in Fig. 10A may be used. Similarly, the hand position-and-orientation specification unit 109 uses, as the indicator 602, a slider bar for specifying the rotation angle about the axis of symmetry corresponding to the gripping position-and-orientation of the hand to be displayed by slider operations. However, an indicator 1002 such as illustrated in Fig. 10B may be used. The indicator 1002 of Fig. 10B is an indicator for specify the rotation angle by rotation of a knob. As illustrated in Fig. 10C, an indicator 1003 in which the indicators 1001 and 1002 are integrated may be used.

<Modification 2>

In the first exemplary embodiment, in step S802, the number of times of symmetry about the axis of symmetry is approximated and set to N = 360/Δθ. However, other methods may be used. For example, the setting of the number of times of symmetry may be set to a value greater than N determined by the foregoing equation. Then, N gripping position-and-orientations may be selected from the calculated gripping position-and-orientations of the hand, and the processing for making the interference determination may be performed thereon. More specifically, after the calculation of the gripping position-and-orientations of the hand in step S805, the freedom degree information presentation unit 108 selects gripping position-and-orientations to perform the gripping possibility determination on, and the gripping possibility determination unit 106 performs the gripping possibility determination on the selected gripping position-and-orientations. As a method for selecting N gripping position-and-orientations, for example, such gripping position-and-orientations that the rotation angles about the axis of symmetry are relatively rotated by Δθ can be selected.

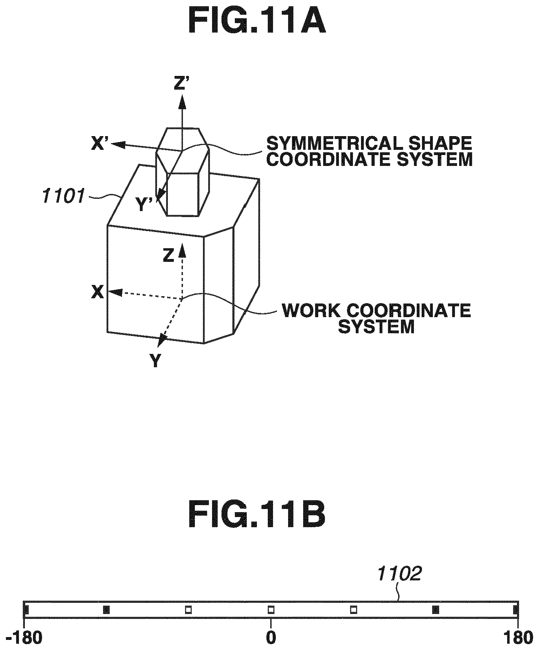

In a second exemplary embodiment, a method for displaying gripping possibility determination results of a hand and hand gripping position-and-orientations with respect to a work including a rotationally symmetrical shape with a finite number of times of symmetry will be described. Fig. 11A illustrates a model shape and a work coordinate system of a work to be discussed in the present exemplary embodiment, and a symmetrical shape coordinate system. A work 1101 illustrated in Fig. 11A includes a rotationally symmetrical shape with a finite number of times of symmetry. The following description focuses on differences from the first exemplary embodiment. A description of portions similar to those of the first exemplary embodiment will be omitted. The present exemplary embodiment also uses the information processing apparatus 100 having the configuration illustrated in Figs. 1A and 1B. A processing procedure for calculating information required for a work recognition test screen according to the present exemplary embodiment is similar to that of Fig. 8, whereas the symmetrical shape coordinate system illustrated in Fig. 11A is set and the Z'-axis is registered as the axis of symmetry in step S802. As for other information to be registered as the symmetry information, the attribute of symmetry is a rotational symmetry, the number of times of symmetry is six, and the range of symmetry is 360 degrees about the Z'-axis.

A difference between the information processing apparatus 100 according to the present exemplary embodiment and that of the first exemplary embodiment is in the freedom degree information presentation unit 108. Fig. 11B illustrates an indicator 1102 which is an example of the freedom degree information presentation unit 108 according to the present exemplary embodiment. In the present exemplary embodiment, N = 6. The indicator 1102 discretely displays gripping possibility determination results at rotation angles corresponding to a total of six gripping position-and-orientations calculated by rotating the reference gripping position-and-orientation about the axis of symmetry in steps of 60 degrees. Unlike the work 201 according to the first exemplary embodiment, the gripping possibility determination results of the work 1101 are unable to be continuously displayed. The reason is that a gripping position-and-orientation rotated from an original gripping position-and-orientation by an angle smaller than 60 degrees is not symmetrical to the original gripping position-and-orientation. If a work has such a finite number of times of symmetry, the gripping possibility determination results are discretely displayed with respect to the rotation angle.

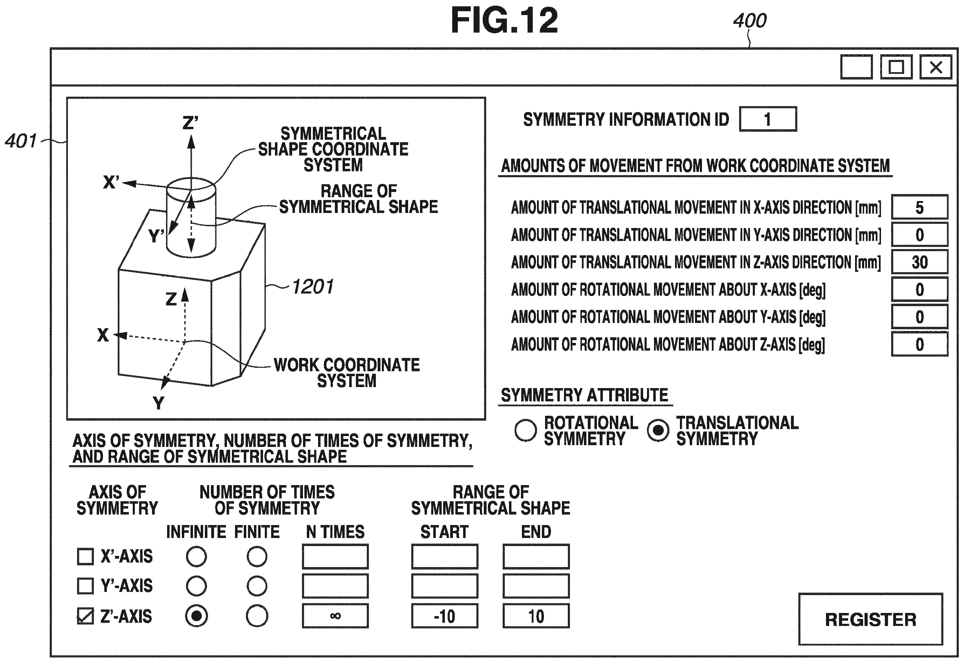

In a third exemplary embodiment, a method for displaying gripping possibility determination results of a hand and hand gripping position-and-orientations with respect to a work including a translationally symmetrical shape will be described. In the present exemplary embodiment, a work 1201 illustrated in Fig. 12 is used for description. The work 1201 is translationally symmetrical in the direction along the Z'-axis of the symmetrical shape coordinate system, with an infinite number of times of symmetry. In other words, the appearance of the work 1201 from the viewpoint of the hand does not change even if the gripping position-and-orientation of the hand is minutely translated along the Z'-axis.

The following description focuses on differences from the first exemplary embodiment. A description of portions similar to those of the first exemplary embodiment will be omitted. The present exemplary embodiment also uses the information processing apparatus 100 having the configuration illustrated in Figs. 1A and 1B. A processing procedure for calculating information required for a work recognition test screen according to the present exemplary embodiment is similar to that of Fig. 8. However, the contents of the symmetry information set in step S802, the method for calculating the symmetrical gripping position-and-orientations to be calculated in step S805, and the contents of the freedom degree information presented in step S807 are different in part.

In step S802, a difference from the first exemplary embodiment lies in that a translational symmetry is registered as the attribute of symmetry and the range of symmetry is specified to be the direction along the axis of symmetry. Fig. 12 illustrates an example of the GUI for setting the symmetry information in step S802. The GUI 400 in Fig. 12 is similar to that used in the first exemplary embodiment, whereas some of the settings are different from the first exemplary embodiment. In the present exemplary embodiment, a translational symmetry is set as the attribute of symmetry, and the range of symmetry is set in the direction along the Z'-axis, which is the axis of symmetry. If a shape classified to have an infinite number of times of symmetry is included, the number of times of symmetry may desirably be set to be as large as possible within a range processable by the information processing apparatus 100.

However, if the performance of the information processing apparatus 100 imposes a non-negligible constraint on the number of times of symmetry, the number of times of symmetry may be approximated and set to a finite value. Like the work 1201, if a translationally symmetrical shape is included, such a translation distance $\Delta L$ that a difference occurring in the gripping position-and-orientation of the hand due to a minute translation distance in the direction along the axis of symmetry will not affect the gripping possibility determination result is set in advance. The translation distance $\Delta L$ can be used to calculate a number of times of symmetry $N = L/\Delta L$ in an approximate manner if the work 1201 has a shape symmetry in the range of L along the axis of symmetry. Hereinafter, the number of times of symmetry of the work 1201 is described to be approximated and set to N expressed by the foregoing equation.

In step S805, a difference from the first exemplary embodiment lies in the method for calculating symmetrical gripping position-and-orientation after the calculation of the reference gripping position-and-orientation of the hand. In the present exemplary embodiment, after the calculation of the reference gripping position-and-orientation of the hand, the hand information storage unit 105 initially determines a position (translation position) obtained by translating the recognition position $t_{RS}$ of the work in the symmetrical shape coordinate system by $\Delta L \times i$ in the direction along the axis of symmetry. Here, i is an integer of 1 to (N - 1). Next, as a gripping position for gripping the work at the translation position, the hand information storage unit 105 determines a position (symmetrical gripping position) $t_{RH\_i}$ of the hand in the relationship of a relative gripping position-and-orientation with respect to the determined translation position. The symmetrical gripping position $t_{RH\_i}$ can be calculated by using the following equation:

$$t_{RH\_i} = R_{RS}(t_{SH} + t_i) + t_{SH},$$

where ti is a vector for making a translation by $\Delta L \times i$ along the axis of symmetry. The gripping position-and-orientation of the hand translated by $\Delta L \times i$ along the axis of symmetry of the work can thus be expressed as follows:

$$T_{RH\_i} = \begin{bmatrix} R_{RH} & t_{RH\_i} \\ 0^T & 1 \end{bmatrix} \quad \dots \text{Eq. 8}$$

As for the degree of freedom of the hand gripping position-and-orientation presented in step S807, the range of position-and-orientations that the hand can take in the direction along the axis of symmetry and corresponding gripping possibility determination results are presented. An indicator similar to that of the first exemplary embodiment is displayed on the screen. A difference from the first exemplary embodiment lies in that the degree of freedom displayed is information about a translational symmetry.

<Modification>

In the third exemplary embodiment, in step S802, the number of times of symmetry of the position-and-orientation in the direction along the axis of symmetry is approximated and set to $N = L/\Delta L$. However, other methods may be used. For example, the setting of the number of times of symmetry may be made to a value greater than N determined by the foregoing equation. Then, N gripping position-and-orientations may be selected from the calculated gripping position-and-orientations of the hand, and the processing for making the interference determination may be performed thereon. More specifically, after the calculation of the gripping position-and-orientations of the hand in step S805, the freedom degree information presentation unit 108 selects gripping position-and-orientations to perform the gripping possibility determination thereon, and the gripping possibility determination unit 106 performs the gripping possibility determination on the selected gripping position-and-orientations. As a method for selecting N gripping position-and-orientations, for example, such gripping position-and-orientations that the translation positions in the direction along the axis of symmetry are relatively translated by $\Delta L$ may desirably be selected.

In a fourth exemplary embodiment, a method for displaying gripping possibility determination results of a hand and hand gripping position-and-orientations with respect to a work having both a rotational symmetry and a translational symmetry will be described. In the present exemplary embodiment, the same work 1201 as that of the third exemplary embodiment is used. The shape of the work 1201 includes a cylindrical shape. A cylindrical shape has an axis of symmetry in a direction coaxial to the cylinder, and is both rotationally and translationally symmetrical with respect to the axis of symmetry. In such a case, the gripping position-and-orientation of the hand has two degrees of freedom, and the gripping position-and-orientation of the hand cannot be determined until the parameters about the two degrees of freedom are specified. For example, even if the rotation angle about the axis of symmetry is specified, the degree of freedom in the direction along the axis of symmetry remains unspecified. On the other hand, even if the translation position in the direction along the axis of symmetry is specified, the degree of freedom about the axis of symmetry remains unspecified.

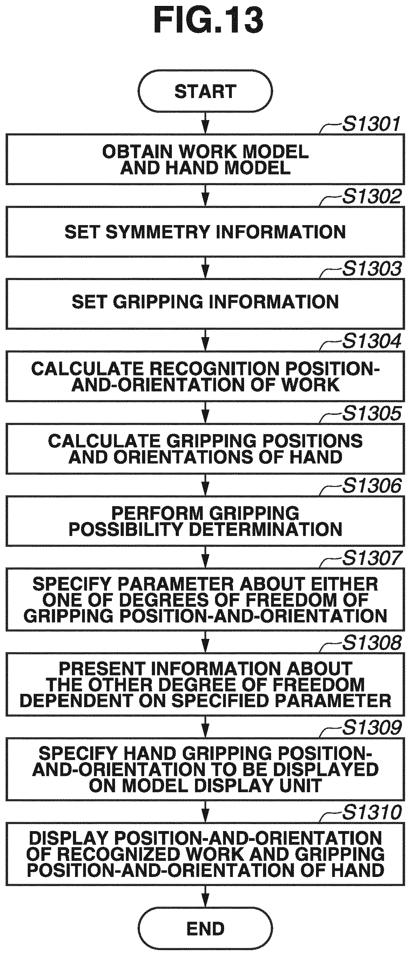

The following description focuses on differences from the first exemplary embodiment. A description of portions similar to those of the first exemplary embodiment will be omitted. The present exemplary embodiment also uses the information processing apparatus 100 having the configuration illustrated in Figs. 1A and 1B. The present exemplary embodiment differs from the first exemplary embodiment in that the hand position-and-orientation specification unit 109 can specify the parameters of the two degrees of freedom. Fig. 13 is a flowchart illustrating a processing procedure for calculating information required for the work recognition test screen according to the present exemplary embodiment. Steps S1301, S1303, S1304, S1306, and S1310 in the processing illustrated in Fig. 13 are processing similar to that of steps S801, S803, S804, S806, and S809 according to the first exemplary embodiment, respectively. A description thereof will thus be omitted.

In step S1302, both a rotational symmetry and a translational symmetry are registered as the attribute of symmetry of the work 1201. If the GUI 400 as illustrated in Fig. 12 is used, information about a rotational symmetry and information about a translational symmetry are individually registered. At that time, the same symmetrical shape coordinate system and the same axis of symmetry may be set for both symmetries. As for the number of times of symmetry and the range of shape symmetry, values corresponding to the respective symmetries need to be registered.

As described in the first and third exemplary embodiments, if the work includes a shape that is classified to have an infinite number of times of symmetry, the number of times of symmetry may desirably be set to a value as large as possible. However, if the performance of the information processing apparatus 100 imposes a non-negligible constraint on the number of times of symmetry, the number of times of symmetry may be approximated and set to a finite value. In the present exemplary embodiment, the number of times of symmetry of the rotational symmetry is described to be set by using a value approximated at $N = 360/\Delta\theta$ and the number of times of symmetry of the translational symmetry $M = L/\Delta L$.

In step S1305, gripping position-and-orientations corresponding to the information about the rotational symmetry and the information about the translational symmetry set in step S1302 are calculated. The parameters for calculating a gripping position-and-orientation need to include both information about the rotation angle about the axis of symmetry, which is the parameter of the rotational symmetry, and information about the translation position in the direction along the axis of symmetry, which is the parameter of the translational symmetry. As described in the first exemplary embodiment, the gripping position-and-orientation of the hand rotated by a rotation angle of $\Delta\theta \times i$ about the axis of symmetry can be expressed as follows:

$$R_{RH\_i} = R_{RS}R_iR_{SH},$$

where $R_i$ is a $3\times3$ rotation matrix for making a rotation by $\Delta\theta \times i$ about the axis of symmetry. As described in the third exemplary embodiment, the gripping position of the hand translated by $\Delta L \times i$ along the axis of symmetry can be expressed as follows:

$$t_{RH\_j} = R_{RS}(t_{SH} + t_j) + t_{SH},$$

where $t_j$ is a vector for making a translation by $\Delta L \times j$ along the axis of symmetry.

The gripping position-and-orientation of the hand rotated $\Delta\theta \times i$ about the axis of symmetry and further translated by $\Delta L \times j$ along the axis of symmetry can thus be expressed as follows:

$$T_{RH\_i\,j} = \begin{bmatrix} R_{RH\_i} & t_{RH\_j} \\ 0^T & 1 \end{bmatrix} \qquad \cdots Eq.\ 9$$

If the number of times of symmetry of the rotational symmetry is N and the number of times of symmetry of the translational symmetry is M, i can be an integer of 0 to (N - 1), and j can be an integer of 0 to (M - 1). The total number of gripping position-and-orientations calculated in step S1305, including the reference gripping position-and-orientation, is N × M.

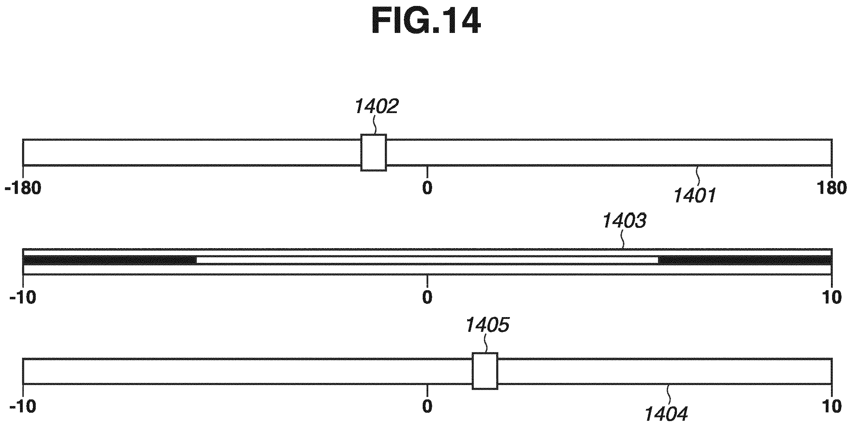

In step S1307, the hand position-and-orientation specification unit 109 specifies the parameter of either one of the two degrees of freedom occurring in the hand gripping position-and-orientation due to the two symmetries of the work shape. In the present exemplary embodiment, the parameter that can be specified in step S1307 is either the rotation angle about the axis of symmetry or the translation position in the direction along the axis of symmetry. Fig. 14 illustrates an indicator 1401, which is an example of the indicator for a case where the rotation angle about the axis of symmetry is specified by operating a slider 1402. In such a case, if the rotation angle about the axis of symmetry is specified by using the indicator 1401, the freedom degree information about the translational symmetry can be presented and a hand gripping position and operation displayed on the screen can be specified in the processing of step S1308 and subsequent steps.

In step S1308, the freedom degree information presentation unit 108 presents information about the other degree of freedom which is dependent on the parameter specified in step S1307. In the present exemplary embodiment, the range of position-and-orientations that the hand can take in the direction along the unspecified axis of symmetry, dependent on the rotation angle about the axis of symmetry specified in step S1307, and corresponding gripping possibility determination results are presented. An indicator 1403 illustrated in Fig. 14 is an example of an indicator for presenting the range of translation positions in the direction along the axis of symmetry and gripping possibility determination results of the hand at respective positions selected by a selection unit. The contents of the information displayed on the indicator 1403 depend on the rotation angle about the axis of symmetry, specified by using the indicator 1401. If the rotation angle specified by using the slider 1402 is changed, the display of the indicator 1403 is thus updated with information dependent on the changed rotation angle.

In step S1309, the hand position-and-orientation specification unit 109 specifies the hand orientation to be displayed on the model display unit 110 among the hand orientations presented to the user by the freedom degree information presentation unit 108. In the present exemplary embodiment, the gripping position-and-orientation of the hand to be displayed can be specified by specifying the translation position in the direction along the axis of symmetry. An indicator 1404 illustrated in Fig. 14 is an example of an indicator that can specify the translation position in the direction along the axis of symmetry by operating a slider 1405. Translation positions that can be specified by using the indicator 1405 depend on the rotation angle specified by using the indicator 1401. If the rotation angle specified by using the indicator 1401 is changed, the translation positions that can be specified by the indicator 1404 are therefore also changed to ones that are dependent on the changed rotation angle.

In the fourth exemplary embodiment, the method for displaying the gripping possibility determination results of the hand and the gripping position-and-orientations of the hand with respect to a work including a shape with two shape symmetries, has been described. The present exemplary embodiment has dealt with the case where the parameter of a translational symmetry (translation position) depends on the parameter of a rotational symmetry (rotation angle), and the freedom degree information about the gripping position-and-orientation of the hand and the gripping possibility determination results are presented to specify the position-and-orientation to be displayed. However, the dependency between the two parameters may be reversed. In other words, the rotation angle may depend on the translation position. A mechanism for switching the symmetry to depend may further be provided.

<Modification 1>

In the fourth exemplary embodiment, the gripping possibility determination on all the hand orientations that can be displayed on the screen is performed before the specification of the parameters about the degrees of freedom by the hand position-and-orientation specification unit 109. Since the number of position-and-orientations of the hand to be calculated in step S1305 increases compared to when the number of shape symmetries of the work is one, gripping possibility determination time required also increases in proportion to the number of position-and-orientations of the hand. The user may desire to check only the gripping possibility determination results of some of the position-and-orientations of the hand within the range where the hand has the degrees of freedom about the gripping position-and-orientation. In such a case, the gripping possibility determination is performed beforehand even on the position-and-orientations that do not need to be checked. Then, as a modification of the fourth exemplary embodiment, after the parameter of either one of the two degrees of freedom is specified by the hand position-and-orientation specification unit 109, the gripping possibility determination is performed on only gripping position-and-orientations that are dependent on the value of the specified parameter.

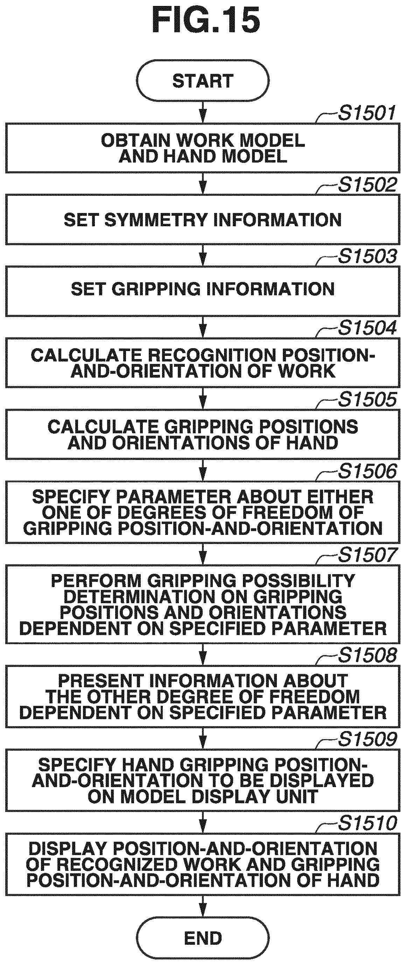

Fig. 15 is a flowchart illustrating a processing procedure for calculating information required for a work recognition test screen according to the present modification. The processing illustrated in Fig. 15 can roughly be said to be the procedure according to the fourth exemplary embodiment in which steps S1306 and S1307 are replaced with each other. A difference lies in that the gripping possibility determination in step S1306 is performed on all the calculated gripping position-and-orientations, whereas the gripping possibility determination in step S1507 is performed on only gripping position-and-orientations that are dependent on the parameter specified in step S1506. In step S1506, the hand position-and-orientation specification unit 109 specifies the parameter of either one of the degrees of freedom, whereby position-and-orientations dependent on the specified parameter are selected as targets of the gripping possibility determination. Information about the selected position-and-orientations is transmitted to the gripping possibility determination unit 106. In step S1507, the gripping possibility determination unit 106 performs the gripping possibility determination on the selected position-and-orientations. In the present modification, the gripping possibility determination unit 106 performs the gripping possibility determination on orientations dependent on the specified parameter each time the hand position-and-orientation specification unit 109 specifies the position-and-orientations of the hand. Thus, the time required to present the information about the degree of freedom in step S1508 tends to be longer than that in step S1308 of the fourth exemplary embodiment. However, if the user desires to check only the gripping possibility determination results about some of the hand orientations, the gripping possibility determination time for orientations that do not need to be checked can be omitted. Therefore, entire processing time can be expected to be reduced, compared to the fourth exemplary embodiment.

<Modification 2>

In the fourth exemplary embodiment, in step S1302, the number of times of symmetry of the rotational symmetry is approximated and set to N = 360/$\Delta\theta$, and the number of times of symmetry of the translational symmetry M = L/$\Delta$L. However, other methods may be used. For example, the settings of the numbers of times of symmetry are set to values greater than N and M determined by the foregoing equations. Next, N rotation angles and M translation positions are selected from the calculated gripping position-and-orientations of the hand, whereby N $\times$ M position-and-orientations are selected as the targets of the gripping possibility determination. Then, the gripping possibility determination is performed on only the selected position-and-orientations. More specifically, after the calculation of the gripping position-and-orientations of the hand in step S1305, the freedom degree information presentation unit 108 selects the gripping position-and-orientations to perform the gripping possibility determination thereon. The gripping possibility determination unit 106 performs the gripping possibility determination on the selected gripping position-and-orientations.

As a method for selecting N rotation angles, for example, rotation angles relatively rotated by $\Delta\theta$ about the axis of symmetry can be selected. As a method for selecting M translation positions, for example, translation positions relatively translated by $\Delta$L in the direction along the axis of symmetry may desirably be selected.

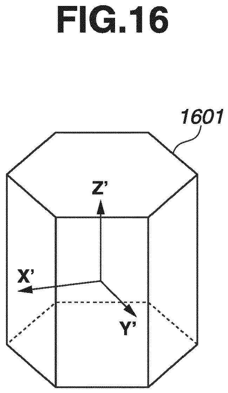

In the fourth exemplary embodiment, the method for displaying the gripping possibility determination results and the gripping position-and-orientations of the hand for a work having different symmetries with respect to the same axis of symmetry has been described. In a fifth exemplary embodiment, a method for displaying gripping possibility determination results and gripping position-and-orientations of a hand for a work having two shape symmetries associated with respective different axes of symmetry in the same symmetrical shape coordinate system will be described. In the present exemplary embodiment, for example, a work 1601 having rotational symmetries in the X'-axis direction and the Z'-axis direction of the same symmetrical shape coordinate system like a regular hexagonal prism illustrated in Fig. 16 is assumed.

The following description focuses on differences from the fourth exemplary embodiment. A description of portions similar to those of the fourth exemplary embodiment will be omitted. The present exemplary embodiment also uses the information processing apparatus 100 having the configuration illustrated in Figs. 1A and 1B. Like the fourth exemplary embodiment, the processing flow according to the present exemplary embodiment will be described with reference to Fig. 13. Steps S1301, S1303, S1304, and S1306 of the processing according to the present exemplary embodiment are similar to those of the fourth exemplary embodiment. A description thereof will thus be omitted.

In step S1302, the symmetry information setting unit 103 set symmetry information. A difference from the fourth exemplary embodiment lies in that a plurality of axes of symmetry is specified in the same symmetrical shape coordinate system. For example, the symmetrical shape coordinate system of the work 1601 is set as illustrated in Fig. 16. The X'- and Z'-axes are both specified as axes of rotational symmetry. The numbers of times of symmetry with respect to the X'- and Z'-axes are set to be two and six, respectively.

In step S1305, gripping position-and-orientations corresponding to the information about the rotational symmetries of the two axes of symmetry set in step S1302 are calculated. The parameters for calculating a gripping position-and-orientation need to include both information about the rotation angle about the axis of symmetry X' and information about the rotation angle about the axis of symmetry Z', which are parameters of rotational symmetries. The angle of rotation to be made about the axis of symmetry X' at a time is 180 degrees since the number of times of symmetry is two. The angle of rotation to be made about the axis of symmetry Z' at a time is 60 degrees since the number of times of symmetry is six. The gripping orientation of the hand rotated 180 $\times$ i degrees about the axis of symmetry X' and 60 $\times$ j degrees about the axis of symmetry Z' can be expressed as follows:

$$R_{RH\_ij} = R_{RS}R_jR_iR_{SH},$$

where Ri is a 3$\times$3 rotation matrix for making a rotation by 180 $\times$ i degrees about the axis of symmetry X', and $R_j$ is a 3$\times$3 rotation matrix for making a rotation by 60 $\times$ j degrees about the axis of symmetry Z'. i is either one of 0 and 1. j is an integer of 0 to 5.

The hand gripping position-and-orientation rotated 180 $\times$ i degrees about the axis of symmetry X' and 60 $\times$ j degrees about the axis of symmetry Z' can thus be expressed as follows:

$$T_{RH\_ij} = \begin{bmatrix} R_{RH\_ij} & t_{RH} \\ 0^T & 1 \end{bmatrix} \qquad \ldots \text{Eq. 10}$$

The total number of gripping position-and-orientations calculated in step S1305, including the reference gripping position-and-orientation, is 12.

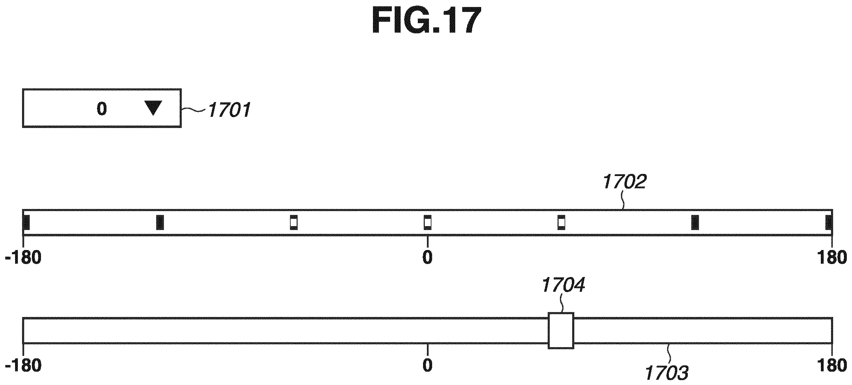

In step S1307, the hand position-and-orientation specification unit 109 specifies the parameter of either one of the two degrees of freedom occurring in the gripping position-and-orientation due to the two symmetries of the work shape. In the present exemplary embodiment, the parameter that can be specified in step S1307 is either the foregoing rotation angle about the axis of symmetry X' or the rotation angle about the axis of symmetry Z'. In the present exemplary embodiment, the rotation angle about the axis of symmetry X' can be specified by using an indicator 1701 illustrated in Fig. 17. The indicator 1701 can specify either 0 degrees or 180 degrees. Such specification enables presentation of the freedom degree information about a translational symmetry and specification of the gripping position-and-orientation to be displayed on the screen in the processing of step S1308 and subsequent steps.

In step S1308, the freedom degree information presentation unit 108 presents information about the other degree of freedom which is dependent on the parameter specified in step S1307. In the present exemplary embodiment, the range of orientations that the hand can take about the other axis of symmetry, which is dependent on the rotation angle about the axis of symmetry specified in step S1307, and corresponding gripping possibility determination results are presented. In the present exemplary embodiment, rotation angles about the axis of symmetry Z', which is dependent on the rotation angle about the axis of symmetry X' specified by the indicator 1701, and gripping possibility determination results at the angles are displayed by an indicator 1702. The contents of the information displayed on the indicator 1702 depend on the rotation angle about the axis of symmetry X', specified by using the indicator 1701. Thus, if the rotation angle specified by the indicator 1701 is changed, the display is updated with information dependent on the changed rotation angle.

In step S1309, the hand position-and-orientation specification unit 109 specifies the hand orientation to be displayed on the model display unit 110 among the hand orientations presented to the user by the freedom degree information presentation unit 108. In the present exemplary embodiment, the gripping position-and-orientation of the hand to be displayed can be specified by specifying the rotation angle about the axis of symmetry Z'. An indicator 1703 illustrated in Fig. 17 is an example of an indicator that can specify the rotation angle about the axis of symmetry Z' by operating a slider 1704. Rotation angles about the axis of symmetry Z' that can be specified by using the indicator 1703 depend on the rotation angle about the axis of symmetry X', specified by using the indicator 1701. Therefore, if the rotation angle about the axis of symmetry X' specified by using the indicator 1701 is changed, the rotation angles about the axis of symmetry Z' that can be specified by the indicator 1703 are also changed.

In the fifth exemplary embodiment, the method for displaying the gripping possibility determination results and the gripping position-and-orientations of the hand for a work having two shape symmetries associated with respective different axes of symmetry in the same symmetrical shape coordinate system has been described. The present exemplary embodiment has dealt with the case where the rotation angle about the axis of symmetry Z' depends on the rotation angle about the axis of symmetry X', and the freedom degree information about the gripping position-and-orientations and the gripping possibility determination results are presented to specify the hand orientation to be displayed. However, the dependency between the two parameters may be reversed. More specifically, the rotation angle about the axis of symmetry X' may depend on the rotation angle about the axis of symmetry Z'. A mechanism for switching the axis of symmetry associated with the rotation angle to depend may further be provided.

<Modification>

In the fifth exemplary embodiment, like the fourth exemplary embodiment, the gripping possibility determination on all the hand orientations that can be displayed on the screen is performed before the specification of the parameters about the degrees of freedom by the hand position-and-orientation specification unit 109. According to such a method, the gripping possibility determination is performed beforehand even on the orientations which the user does not need to check the gripping possibility determination results of. Then, as a modification of the fifth exemplary embodiment, after the parameter of either one of the two degrees of freedom is specified by the hand position-and-orientation specification unit 109, processing for performing the gripping possibility determination on only hand orientations dependent on the value of the specified parameter may be performed. Like the modification 1 of the fourth exemplary embodiment, the processing flow here follows the flowchart illustrated in Fig. 15.

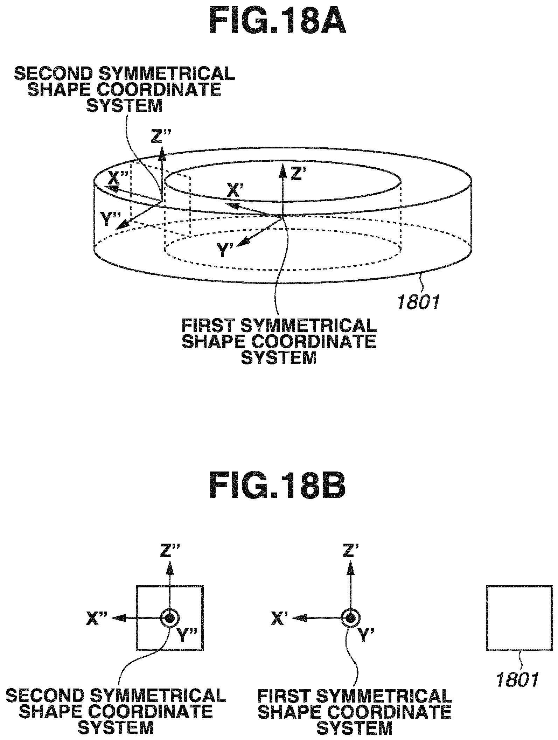

In a sixth exemplary embodiment, a method for displaying gripping possibility determination results and gripping position-and-orientations of a hand with respect to a work having two shape symmetries associated with symmetrical shape coordinate systems of respective different symmetries will be described. Fig. 18A illustrates a work 1801 to be discussed in the present exemplary embodiment. The work 1801 has a rotational symmetry with an infinite number of times of symmetry about a Z'-axis of a first symmetrical shape coordinate system. When the work 1801 is seen in the direction of a Y'-axis of the first symmetrical shape coordinate system, the work 1801 has cross sections of a square shape. Fig. 18B illustrates the cross sections of the work 1801 to be observed when the work 1801 is seen in the -Y'-axis direction of the first symmetrical shape coordinate system. Suppose that the origin of the first symmetrical shape coordinate system is translated in the X' direction to set a second symmetrical shape coordinate system at the center of the square of a cross section of the work 1801. In such a case, the cross-sectional shape has a rotational symmetry with a number of times of symmetry of four about a Y''-axis of the second symmetrical shape coordinate system.

In more generalization, a second symmetrical shape coordinate system is a coordinate system defined based on a relative position-and-orientation relationship with the first symmetrical shape coordinate system. More specifically, the second symmetrical shape coordinate system can be defined as a coordinate system in which the normal direction of a cross section formed by a plane that is the X'Z' plane of the work 1801 rotated about the Z'-axis is the Y''-axis, the same axis as the Z'-axis is a Z''-axis, and an axis perpendicular to the Y'' - and Z''-axes is an X''-axis. Since the work 1801 has a rotational symmetry with an infinite number of times of symmetry about the Z'-axis of the first symmetrical shape coordinate system, the number of second symmetrical shape coordinate systems that can be defined is also infinite. In the present exemplary embodiment, the number of times of symmetry of the rotational symmetry in the first symmetrical shape coordinate system is approximated by $N = 360/\Delta\theta$. N second symmetrical shape coordinate systems are calculated, and then gripping position-and-orientations associated with the second symmetrical shape coordinate systems are calculated. Here, $\Delta\theta$ refers to a difference in the rotation angle about the axis of symmetry with which a difference occurring in the gripping position-and-orientation due to a minute difference in the rotation angle will not affect the gripping possibility determination result to be described below.

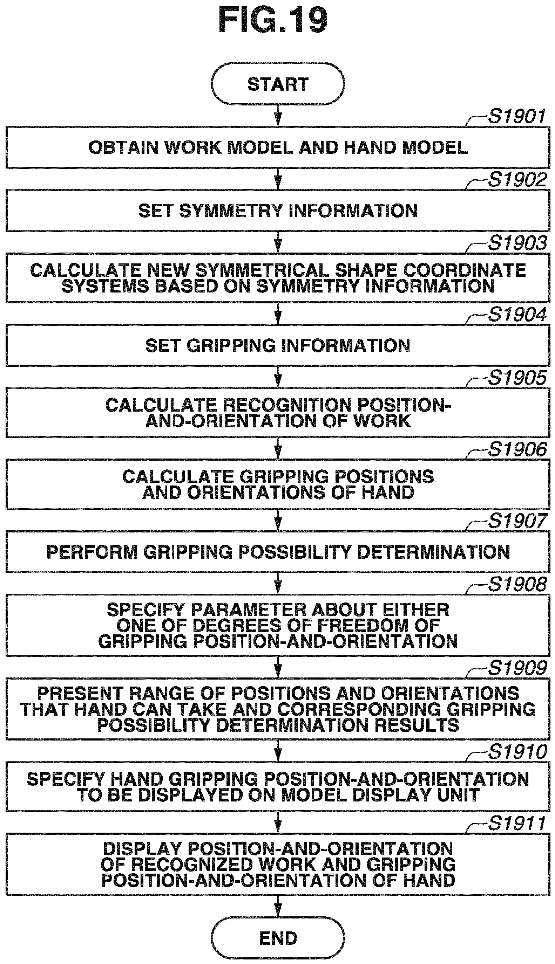

The following description focuses on differences from the fourth exemplary embodiment. A description of portions similar to those of the fourth exemplary embodiment will be omitted. The present exemplary embodiment also uses the information processing apparatus 100 having the configuration illustrated in Figs. 1A and 1B. Fig. 19 is a flowchart illustrating a processing procedure for calculating information required for a work recognition test screen according to the present exemplary embodiment. Steps S1901, S1904, S1905, S1907, and S1911 in the processing illustrated in Fig. 19 are processing similar to that of steps S1301, S1303, S1304, S1306, and S1310 according to the fourth exemplary embodiment, respectively. A description thereof will thus be omitted.

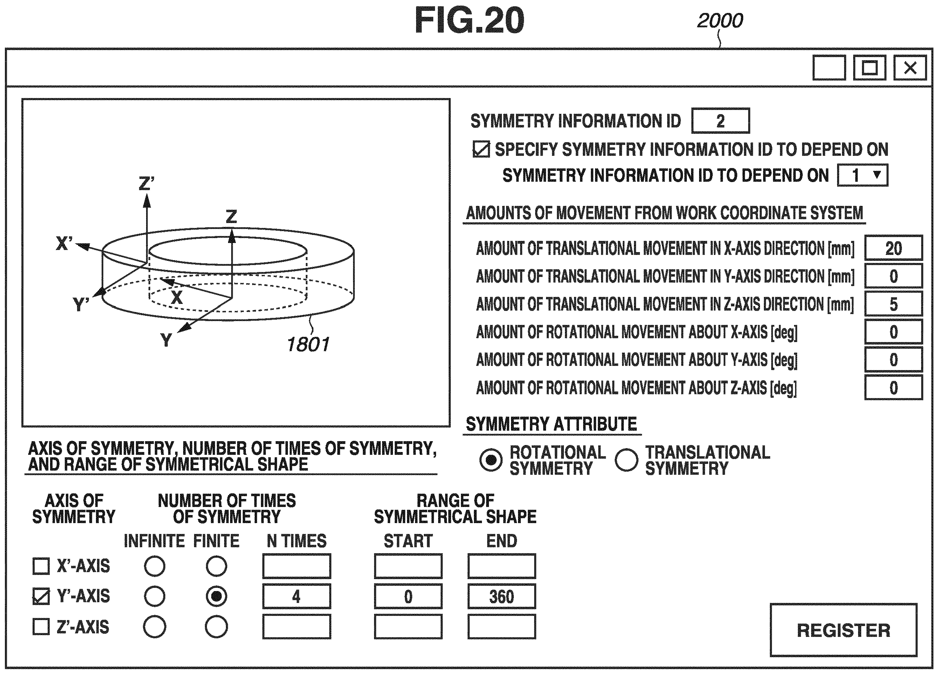

In step S1902, the symmetry information setting unit 103 sets information about the two rotational symmetries of the work 1801. The method for setting the symmetry information associated with the foregoing first symmetrical shape coordinate system is similar to the setting method according to the fourth exemplary embodiment. On the other hand, the symmetry information about the first symmetrical shape coordinate system is required to set second symmetrical shape coordinate system. In the present exemplary embodiment, the symmetry information setting unit 103 sets one first symmetrical shape coordinate system and one second symmetrical shape coordinate system, and then calculates relative position-and-orientation information about the first and second symmetrical shape coordinate systems. Fig. 20 illustrates an example of a GUI for setting the symmetry information associated with the second symmetrical shape coordinate system. A GUI 2000 of Fig. 20 can specify a symmetry information ID to make the symmetry information to be set dependent thereon, in addition to the symmetry information described above. In the present exemplary embodiment, the symmetry information associated with the second symmetrical shape coordinate system needs to depend on the symmetry information associated with the first symmetrical shape coordinate system. Accordingly, using the GUI 2000, the user turns on a flag to specify a symmetry information ID to depend on by a checkbox, and specifies the symmetry information ID associated with the first symmetrical shape coordinate system from a list. If the user specifies the symmetry information ID to depend on and presses the registration button, the symmetry information setting unit 103 calculates the relative position-and-orientation information about the first and second symmetrical shape coordinate systems.

In step S1903, the symmetry information setting unit 103 calculates new symmetrical shape coordinate systems by using the symmetry information associated with the second symmetrical shape coordinate system set in step S1902 and the relative position-and-orientation information about the first and second symmetrical shape coordinate systems, calculated in step S1902. The calculated new symmetrical shape coordinate systems are associated with the symmetry information that is associated with the second symmetrical shape coordinate system set in step S1902, along with the rotation angles about the axis of symmetry in the first symmetrical shape coordinate system. The resultants are assigned unique symmetry information IDs and registered.

The symmetrical shape coordinate systems calculated in step S1903 are obtained by rotating the second symmetrical shape coordinate system about the axis of symmetry in the first symmetrical shape coordinate system. For example, in the case of the work 1801, the symmetry information setting unit 103 calculates the symmetrical shape coordinate systems by rotating the second symmetrical shape coordinate system about the axis of symmetry in the first symmetrical shape coordinate system by $\Delta\theta \times i$. i is an integer of 1 to (N - 1). The calculated new symmetrical shape coordinate systems are newly associated with the rotation angles about the axis of symmetry in the first symmetrical shape coordinate system and the symmetry information set in association with the second symmetrical shape coordinate system. The resultants are assigned unique symmetry information IDs and registered. The symmetry information set in association with the second symmetrical shape coordinate system includes the symmetry information ID to depend on, the attribute of symmetry, the axis of symmetry, the number of times of symmetry, and the range of the symmetrical shape. At the stage when the processing up to step S1903 is completed, a total of N symmetrical shape coordinate systems and the symmetry information are registered as being dependent on the symmetry information associated with the first symmetrical shape coordinate system.

In step S1906, gripping position-and-orientations corresponding to the information about the rotational symmetry of each of the axes of symmetry set up to step S1905 are calculated. Initially, with respect to the first symmetrical shape coordinate system, N gripping position-and-orientations rotated about the axis of symmetry in steps of $\Delta\theta$ are calculated. The N gripping position-and-orientations calculated at that time are associated with the respective N symmetrical shape coordinate systems dependent on the first symmetrical shape coordinate system according to the rotation angles about the axis of symmetry. Next, with respect to each of the associated gripping position-and-orientations, four gripping position-and-orientations rotated about the axis of symmetry of the corresponding symmetrical shape coordinate system in steps of 90 degrees (360/4) are calculated. The gripping position-and-orientations calculated at that time are registered in association with the same symmetry information ID as that the corresponding symmetrical shape coordinate system is associated with. In step S1906, a total of $4 \times N$ gripping position-and-orientations are calculated.

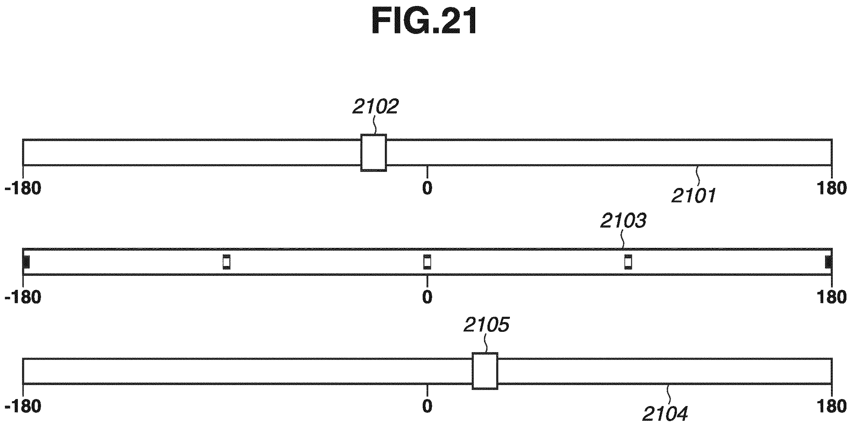

In step S1908, the hand position-and-orientation specification unit 109 specifies the rotation angle about the axis of symmetry of the first symmetrical shape coordinate system. In the present exemplary embodiment, an indicator 2101 illustrated in Fig. 21 is used to specify the rotation angle by operating a slider 2102. Specifying the rotation angle in step S1908 enables the presentation of the freedom degree information about the symmetrical shape coordinate systems and the symmetry information that is dependent on the first symmetrical shape coordinate system and the specification of the hand gripping position-and-orientation to be displayed on the screen in step S1909 and subsequent steps.

In step S1909, the freedom degree information presentation unit 108 selects the symmetrical shape coordinate systems and the symmetry information corresponding to the rotation angle about the axis of symmetry of the first symmetrical shape coordinate system, specified in step S1908. Then, the range of position-and-orientations that the hand can take about the axis of symmetry according to the selected symmetry information and corresponding gripping possibility determination results are presented. An indicator 2103 in Fig. 21 displays rotation angles about the axis of symmetry according to the symmetry information corresponding to the rotation angle specified by the indicator 2101 and the gripping possibility determination results at the rotation angles. The contents of the information displayed on the indicator 2103 depend on the rotation angle about the axis of symmetry of the first symmetrical shape coordinate system, specified by using the indicator 2101. Therefore, if the rotation angle specified by the indicator 2101 is changed, the display is updated with information dependent on the changed rotation angle.

In step S1910, the hand position-and-orientation specification unit 109 specifies the gripping position-and-orientation to be displayed on the model display unit 110 among the gripping position-and-orientations presented to the user by the freedom degree information presentation unit 108. In the present exemplary embodiment, the rotation angle about the axis of symmetry dependent on the rotation angle about the axis of symmetry of the first symmetrical shape coordinate system, specified by the indicator 2101, can be specified by operating a slider 2105 on an indicator 2104 of Fig. 21. Here, if the rotation angle about the axis of symmetry of the first symmetrical shape coordinate system, specified by using the indicator 2101 is changed, the gripping position-and-orientations that can be specified by the indicator 2104 are also changed since the axis of symmetry to depend on changes.

<Modification>

In the sixth exemplary embodiment, like the fourth and fifth exemplary embodiments, the gripping possibility determination is performed on all the gripping position-and-orientations of the hand that can be displayed on the screen before the parameters about the degrees of freedom are specified by the hand position-and-orientation specification unit 109. According to such a method, the gripping possibility determination is performed beforehand even on the orientations which the user does not need to check the gripping possibility determination results of. Then, as a modification of the sixth exemplary embodiment, after the rotation angle about the axis of symmetry of the first symmetrical shape coordinate system is specified by the hand position-and-orientation specification unit 109, processing for performing the gripping possibility determination on only gripping position-and-orientations about the axis of symmetry of the dependent symmetrical shape coordinate system may be performed. The processing flow in this case is that of the flowchart of Fig. 19 in which steps S1907 and S1908 are replaced with each other.

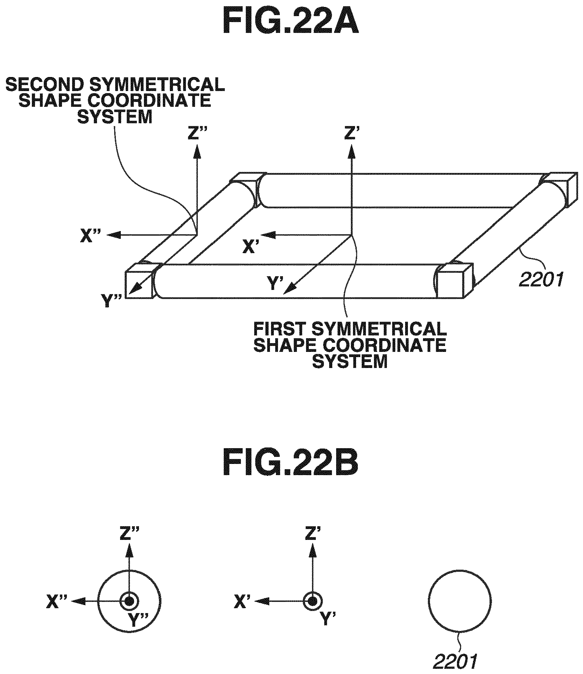

In a seventh exemplary embodiment, a method for displaying gripping possibility determination results of a hand and hand gripping position-and-orientations with respect to a work having three shape symmetries will be described. Figs. 22A illustrates a work 2201 to be discussed in the present exemplary embodiment. The work 2201 has a rotational symmetry with a number of times of symmetry of four about the Z'-axis in the first symmetrical shape coordinate system. When the work 2201 is seen in the direction of the Y'-axis in the first symmetrical shape coordinate system, the work 2201 has X'Z' cross sections of circular shape. This circular shape is a cross section of a circular columnar shape having a height direction in the Y' direction. Fig. 22B illustrates the cross sections of the work 2201 to be observed when the X'Z' cross sections of the work 2201 are seen in the -Y'-axis direction in the first symmetrical shape coordinate system. Suppose that the origin of the first symmetrical shape coordinate system is translated in the X' direction to set a second symmetrical shape coordinate system at the center of the circle of an X'Z' cross section of the work 2201. In such a case, the cross-sectional shape has a rotational symmetry with an infinite number of times of symmetry about the Y"-axis of the second symmetrical shape coordinate system. The second symmetrical shape coordinate system also has a translational symmetry with an infinite number of times of symmetry in the Y"-axis direction.

In more generalization, a second symmetrical shape coordinate system is a coordinate system defined based on a relative position-and-orientation relationship with the first symmetrical shape coordinate system. More specifically, the second symmetrical shape coordinate system can be defined as a coordinate system in which the normal direction of a cross section formed by a plane that is the X'Z' plane of the work 2201 rotated about the Z'-axis is the Y" '-axis, the same axis as the Z'-axis is a Z' '-axis, and an axis perpendicular to the Y" - and Z"-axes is an X''-axis. Since the work 2201 has a rotational symmetry with a number of times of symmetry of four about the Z'-axis of the first symmetrical shape coordinate system, the number of second symmetrical shape coordinate systems that can be defined is also four. In the present exemplary embodiment, four second symmetrical shape coordinate systems are calculated, and then gripping position-and-orientations associated with the second symmetrical shape coordinate systems are calculated. If the range of the symmetrical shape of rotational symmetry in a second symmetrical shape coordinate system is 360 degrees about the axis of symmetry and the range of the symmetrical shape of translational symmetry is L in the direction along the axis of symmetry, the numbers of times of symmetry of the rotational symmetry and the translational symmetry can be approximated by $N = 360/\Delta\theta$ and $M = L/\Delta L$, respectively. Here, $\Delta\theta$ refers to a difference in the rotation angle about the axis of symmetry with which a difference occurring in the gripping position-and-orientation of the hand due to a minute difference in the rotation angle will not affect the gripping possibility determination result to be described below. $\Delta L$ refers to a translation distance such that a difference occurring in the gripping position-and-orientation of the hand due to a minute translation distance in the direction along the axis of symmetry will not affect the gripping possibility determination result.

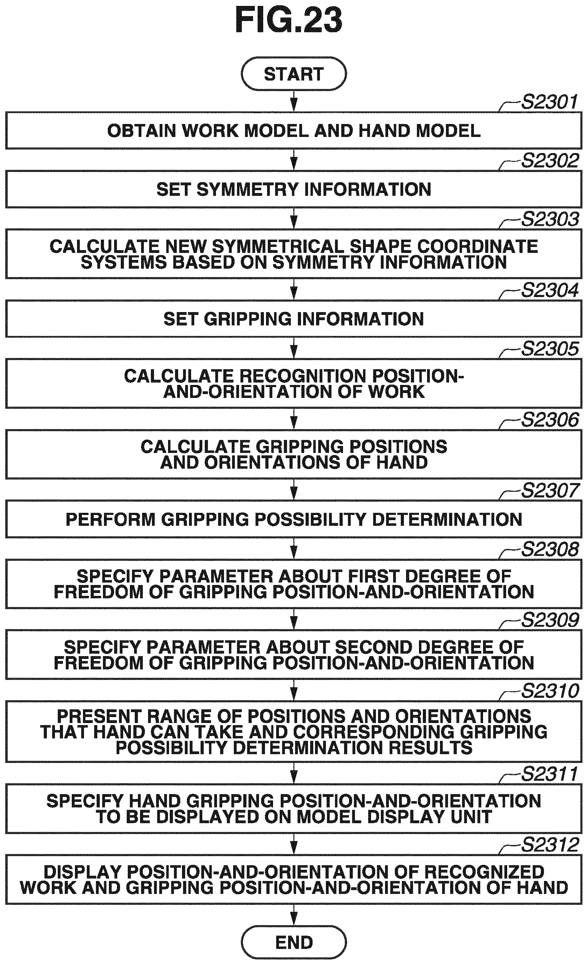

The following description focuses on differences from the sixth exemplary embodiment. A description of portions similar to those of the sixth exemplary embodiment will be omitted. The present exemplary embodiment also uses the information processing apparatus 100 having the configuration illustrated in Figs. 1A and 1B. Fig. 23 is a flowchart illustrating a processing procedure for calculating information required for a work recognition test screen according to the present exemplary embodiment. Steps S2301, S2304, S2305, S2307, and S2312 in the processing illustrated in Fig. 23 are processing similar to that of steps S1901, S1904, S1905, S1907, and S1911 according to the fourth exemplary embodiment, respectively. A description thereof will thus be omitted.

In step S2302, the symmetry information setting unit 103 sets three pieces of symmetry information about the work 2201. The method for setting the symmetry information associated with the foregoing first symmetrical shape coordinate system is similar to the setting method according to the sixth exemplary embodiment. The symmetry information associated with the second symmetrical shape coordinate system is also similar to that of the sixth exemplary embodiment. However, a difference from the sixth exemplary embodiment lies in that a translational symmetry in the direction along the axis of symmetry is also set as the symmetry information associated with the second symmetrical shape coordinate system in addition to rotational symmetry about the axis of symmetry. In other words, two pieces of symmetry information are set in association with the second symmetrical shape coordinate system. In setting the two pieces of symmetry information, the symmetry information setting unit 103 specifies the symmetry information associated with the first symmetrical shape coordinate system as the symmetry information for both the pieces to depend on. Relative position-and-orientation information about the first and second symmetrical shape coordinate systems is calculated by specifying the symmetry information associated with the second symmetrical shape coordinate system in step S2302. The numbers of times of symmetry to be set in the present exemplary embodiment and the information about the ranges of the symmetrical shapes are as described above.

In step S2303, the symmetry information setting unit 103 calculates new symmetrical shape coordinate systems by using the symmetry information associated with the second symmetrical shape coordinate system set in step S2302 and the relative position-and-orientation information about the first and second symmetrical shape coordinate systems calculated in step S2302. The calculated new symmetrical shape coordinate systems are associated with the symmetry information associated with the second symmetrical shape coordinate system set in step S2302, along with the rotation angles about the axis of symmetry of the first symmetrical shape coordinate system. The resultant are assigned unique symmetry information IDs and registered. Here, the symmetry information associated with the second symmetrical shape coordinate system refers to the two pieces of symmetry information, i.e., the information about a rotational symmetry and the information about a translational symmetry. In other words, in step S2303, the processing performed on a single piece of symmetry information in step S1903 according to the sixth exemplary embodiment is performed on the two pieces of symmetry information about a rotational symmetry and a translational symmetry.

In step S2306, the hand information storage unit 105 calculates gripping position-and-orientations corresponding to the symmetry information about both the axes of symmetry set up to step S2305. Initially, the hand information storage unit 105 calculates a total of four gripping position-and-orientations rotated about the axis of symmetry in steps of 90 degrees, including the reference gripping position-and-orientation, with respect to the first symmetrical shape coordinate system. The calculated four gripping position-and-orientations are associated with the respective four symmetrical shape coordinate systems dependent on the first symmetrical shape coordinate system according to the rotation angles about the axis of symmetry. Next, with respect to each of the associated gripping position-and-orientations, the hand information storage unit 105 calculates gripping position-and-orientations rotated about the axis of symmetry of the corresponding symmetrical shape coordinate system and gripping position-and-orientations translated in the direction along the axis of symmetry. The rotation angles about the axis of symmetry are $\Delta\theta \times i$, and the translation distances in the direction along the axis of symmetry are $\Delta L \times j$. Here, N gripping position-and-orientations are calculated about the axis of symmetry and M gripping position-and-orientations are calculated in the direction along the axis of symmetry. The calculated gripping position-and-orientations are registered in association with the same symmetry information ID as that the corresponding symmetrical shape coordinate system is associated with. In step S2306, a total of $4 \times N \times M$ gripping position-and-orientations are calculated.

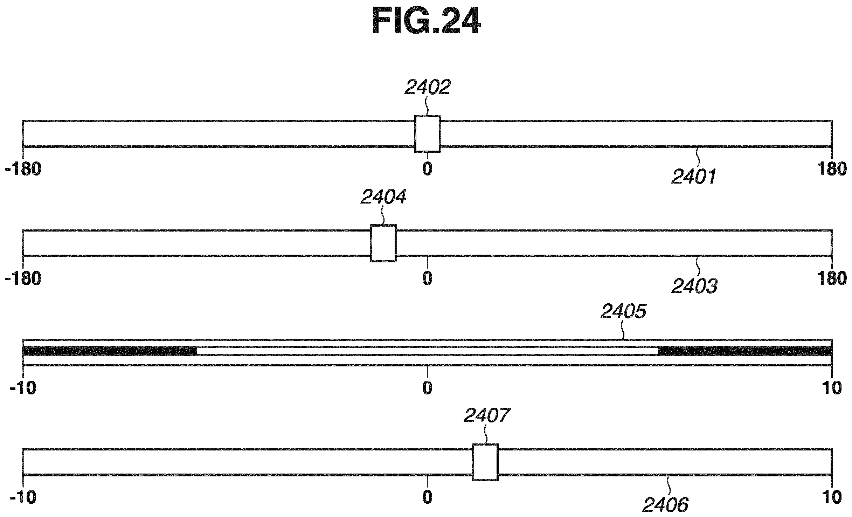

In step S2308, the hand position-and-orientation specification unit 109 specifies the rotation angle about the axis of symmetry of the first symmetrical shape coordinate system. In the present exemplary embodiment, an indicator 2401 illustrated in Fig. 24 is used to specify the rotation angle by operating a slider 2402.

In step S2309, the freedom degree information presentation unit 108 selects the symmetrical shape coordinate systems and the symmetry information corresponding to the rotation angle about the axis of symmetry of the first symmetrical shape coordinate system, specified in step S2308. The freedom degree information presentation unit 108 further specifies the rotation angle about the axis of symmetry or the translation position in the direction along the axis of symmetry, associated with the symmetry information. In the present exemplary embodiment, the gripping position-and-orientation of the hand has three degrees of freedom. Therefore, three parameters need to be specified to determine the position-and-orientation of the hand to be displayed. Two of the parameters are specified in steps S2308 and S2309, respectively. In the present exemplary embodiment, an indicator 2403 illustrated in Fig. 24 is used to specify the rotation angle about the axis of symmetry of the symmetrical shape coordinate system corresponding to the rotation angle about the axis of symmetry of the first symmetrical shape coordinate system by operating a slider 2404.

In step S2310, the freedom degree information presentation unit 108 presents the range of position-and-orientations that the hand can take and corresponding gripping possibility determination results with respect to the symmetry dependent on the parameters specified in steps S2308 and S2309. An indicator 2405 illustrated in Fig. 24 indicates the translation positions in the direction along the axis of symmetry of the symmetrical shape coordinate system corresponding to the rotation angle about the axis of symmetry of the first symmetrical shape coordinate system, and gripping possibility determination results at the positions.

In step S2311, the hand position-and-orientation specification unit 109 specifies the gripping position-and-orientation to be displayed on the model display unit 110 among the gripping position-and-orientations presented to the user by the freedom degree information presentation unit 108. In the present exemplary embodiment, the gripping position-and-orientation of the hand to be displayed can be specified by operating a slider 2407 on an indicator 2406 illustrated in Fig. 24. If the parameters specified by using the indicators 2401 and 2403 are changed, gripping position-and-orientations that can be specified by the indicator 2406 also change since the axes of symmetry and the parameters to depend on are changed.

In the seventh exemplary embodiment, the method for displaying the gripping possibility determination results of the hand and the hand gripping position-and-orientations with respect to a work having three shape symmetries has been described. In the present exemplary embodiment, the parameter of a rotational symmetry (rotation angle) is described to depend on the parameter of a translational symmetry (translation position) with respect to the axis of symmetry set in the symmetrical shape coordinate system corresponding to the rotation angle about the axis of symmetry of the first symmetrical shape coordinate system. However, the dependency between the two parameters may be reversed. In other words, the rotation angle may depend on the translation position. A mechanism for switching the symmetry to depend may further be provided.

<Modification 1>

In the seventh exemplary embodiment, like the sixth exemplary embodiment, the gripping possibility determination is performed on all the gripping position-and-orientations of the hand that can be displayed on the screen before the parameters about the degrees of freedom are specified by the hand position-and-orientation specification unit 109. According to such a method, the gripping possibility determination is performed beforehand even on the orientations which the user does not need to check the gripping possibility determination results of. Then, as a modification of the seventh exemplary embodiment, after the rotation angle about the axis of symmetry of the first symmetrical shape coordinate system is specified by the hand position-and-orientation specification unit 109, processing for performing the gripping possibility determination on only gripping position-and-orientations about the axis of symmetry of the dependent symmetrical shape coordinate system may be performed. The processing flow here may be that of the flowchart of Fig. 23 in which steps S2307 and S2308 are replaced with each other. Alternatively, step S2306 may be followed by steps S2308 and S2309, and then step S2307.

<Modification 2>

In the seventh exemplary embodiment, in step S2302, the number of times of symmetry of the rotational symmetry in the symmetrical shape coordinate system dependent on the first symmetrical shape coordinate system is approximated and set to N = 360/$\Delta\theta$, and the number of times of symmetry of the translational symmetry M = L/$\Delta$L. However, other methods may be used. For example, the settings of the numbers of times of symmetry are set to values greater than N and M determined by the foregoing equations. Next, N rotation angles and M translation positions are selected from the calculated gripping position-and-orientations of the hand. Since the number of times of symmetry about the axis of symmetry in the first symmetrical shape coordinate system is four, a total of 4 $\times$ N $\times$ M position-and-orientations are selected as the targets of the gripping possibility determination. Then, the gripping possibility determination is performed only on the selected position-and-orientations. More specifically, after the calculation of the gripping position-and-orientations of the hand in step S2306, the freedom degree information presentation unit 108 selects the gripping position-and-orientations to perform the gripping possibility determination thereon. The gripping possibility determination unit 106 performs the gripping possibility determination on the selected gripping position-and-orientations. As a method for selecting N rotation angles, for example, rotation angles relatively rotated by $\Delta\theta$ about the axis of symmetry may desirably be selected. As a method of selecting M translation positions, for example, translation positions relatively translated by $\Delta$L in the direction along the axis of symmetry may desirably be selected.

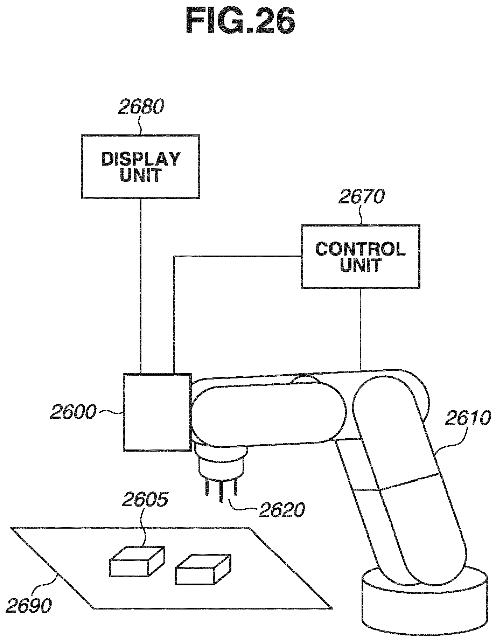

The foregoing information processing apparatus 100 can be used in cooperation with a robot arm. For example, in the present exemplary embodiment, a control system equipped and used for a robot arm 2610 (gripping apparatus) as illustrated in Fig. 26 will be described. A measurement apparatus 2600 projects patterned light on objects to be measured (objects or works) 2605 placed on a support base 2690, and captures and obtains an image. A control unit of the measurement apparatus 2600 or a control unit 2670 obtaining image data from the control unit of the measurement apparatus 2600 determines the position-and-orientations of the objects to be measured 2605. The control unit 2670 obtains information about the position-and-orientations which are the measurement results. The control unit 2670 includes the information processing apparatus 100 according to an exemplary embodiment of the present invention described above. An operator can thereby check the hand gripping possibility in each case, and determines which work 2605 is gripped with the hand in what gripping orientation. Alternatively, the information processing apparatus 100 may be provided outside and configured to output commands to the control unit 2670.

Then, the control unit 2670 transmits driving commands to and controls the robot arm 2610 based on information about the determined position-and-orientation. The c holds the object to be measured 2605 by a robot hand (gripping unit) at the end of the robot arm 2610, and translates and/or rotates, i.e., moves the object to be measured 2605. A product including a plurality of parts, like an electronic circuit board and a machine, can be manufactured by assembling the object to be measured 2605 to another part with the robot arm 2610. A product can be manufactured by processing the moved object to be measured 2605. The control unit 2607 includes an arithmetic unit such as a CPU, and a storage device such as a memory. A control unit for controlling the robot arm 2610 may be provided outside the control unit 2670. Measurement data measured by the measurement apparatus 2600 or the obtained image may be displayed on a display unit 2680. The display unit 2680 can also be used in checking the hand gripping possibility and making a gripping determination.

<Other Exemplary Embodiments>

An exemplary embodiment of the present invention can be implemented by processing for supplying a program for implementing one or more functions of the foregoing exemplary embodiments to a system or apparatus via a network or storage medium, and reading and executing the program by one or more processors in a computer of the system or apparatus. An exemplary embodiment of the present invention can be implemented by a circuit for implementing one or more functions (for example, application specific integrated circuit (ASIC)).

More specifically, embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

According to the foregoing exemplary embodiments of the present invention, for example, there can be provided an information processing apparatus which is advantageous in determining whether the gripping unit can grip an object with respect to which the gripping unit has a degree of freedom in position-and-orientation when gripping the object.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An information processing apparatus determines possibility of gripping an object by a gripping unit, obtains first information, which is information about a position and orientation of the gripping unit with respect to a part of the object, taught to grip the part, second information, which is information about symmetry of the part, third information, which is information about a position and orientation of the object to be gripped by the gripping unit, and fourth information, which is information about vicinity objects in the vicinity of the object to be gripped by the gripping unit. The information processing apparatus includes a processing unit configured to make a determination, based on the first to fourth information, on the possibility with respect to a plurality of sets of position and orientation possible for the gripping unit to take with respect to the object to be gripped based on the symmetry.

**Claims**

1.  An information processing apparatus for determining possibility of gripping an object by a gripping means, the information processing apparatus comprising:
    a processing means configured to obtain first information, second information, third information, and fourth information, and make a determination, based on the first to fourth information, on the possibility of gripping the object for a plurality of sets of position and orientations possible for the gripping means to take with respect to the object to be gripped by the gripping means based on symmetry of a part of the object, the first information being information about a position and orientation of the gripping means with respect to the part of the object, taught to grip the part, the second information being information about the symmetry of the part of the object, the third information being information about the position and orientation of the object to be gripped by the gripping means, the fourth information being information about vicinity objects in the vicinity of the object to be gripped by the gripping means..

**2.** The information processing apparatus according to claim 1, further comprising a display means,
wherein the display means includes a first display portion configured to display a result of the determination with respect to each of the plurality of sets of position and orientation possible for the gripping means to take.

**3.** The information processing apparatus according to claim 2, wherein the display means includes a second display portion for specifying one position and orientation among the plurality of sets of the position and orientation, and a third display portion for displaying the gripping means taking the specified one position and orientation and the object to be gripped by the gripping means.

**4.** The information processing apparatus according to claim 3, wherein the second display portion is a display portion for performing the specifying with respect to each of a plurality of degrees of freedom relating to the plurality of sets of position and orientation.

**5.** The information processing apparatus according to claim 3, wherein the second display portion is a display portion for specifying the one position and orientation with respect to a degree of freedom of rotation about an axis relating to the symmetry.

**6.** The information processing apparatus according to claim 5, wherein the first display portion is a display portion for, even in a case where the plurality of sets of position and orientation possible to take with respect to the degree of freedom is infinite in number, displaying a result of the determination by approximating the case so that the plurality of sets of position and orientation with respect to the degree of freedom lies discretely.

**7.** The information processing apparatus according to claim 3, wherein the second display portion is a display portion for specifying the one position and orientation with respect to a degree of freedom of translation along an axis relating to the symmetry.

**8.** The information processing apparatus according to claim 3, wherein the second display portion includes a movable portion for specifying the one position and orientation.

**9.** The information processing apparatus according to claim 10, wherein the movable portion is configured to, even in a case where the plurality of sets of position and orientation possible to take with respect to a specific degree of freedom is infinite in number, be discretely movable by approximating the case so that the plurality of sets of position and orientation with respect to the degree of freedom lies discretely.

**10.** The information processing apparatus according to claim 8, wherein the movable portion is a movable portion for, in a case where the plurality of sets of position and orientation has a plurality of degrees of freedom and a position and orientation are specified with respect to a degree of freedom other than a specific degree of freedom, specifying the one position and orientation with respect to the specific degree of freedom.

**11.** The information processing apparatus according to claim 2, wherein the first display portion is a display portion for, in a case where the plurality of sets of position and orientation has a plurality of degrees of freedom and a position and orientation are specified with respect to a degree of freedom other than a specific degree of freedom, displaying a result of the determination with respect to the specific degree of freedom.

**12.** The information processing apparatus according to claim 2, wherein the first display portion is a display portion for, in a case where the plurality of sets of position and orientation has a plurality of degrees of freedom, displaying a result of the determination with respect to the plurality of degrees of freedom.

**13.** The information processing apparatus according to claim 1, wherein the fourth information includes information about positions and orientations of the vicinity objects in the vicinity of the object to be gripped by the gripping means.

**14.** A system comprising:

the information processing apparatus configured to obtain information about a position and orientation of an object to be gripped by the gripping means according to claim 1; and
a robot configured to grip and move the object based on the information obtained by the information processing apparatus.

15. An information processing method for determining possibility of gripping of an object by a gripping means, the information processing method comprising:

obtaining first information, second information, third information, and fourth information, the first information being information about a position and orientation of the gripping means with respect to a part of the object, taught to grip the part, the second information being information about a symmetry, the third information being information about the position and orientation of the object to be gripped by the gripping means, the fourth information being information about vicinity objects in the vicinity of the object to be gripped by the gripping means; and

making a determination, based on the first to fourth information, on the possibility of gripping the object for the plurality of sets of position and orientation possible for the gripping means to take with respect to the object to be gripped by the gripping means based on the symmetry of the part of the object.

16. The information processing method according to claim 15, further comprising displaying a result of the determination with respect to each of the plurality of respective positions and orientations.

17. The information processing method according to claim 16, wherein the displaying includes providing a display for specifying one position and orientation among the plurality of sets of position and orientation, and displaying the gripping means taking the specified one position and orientation and the object to be gripped by the gripping means.

18. A storage medium storing a program for causing a computer to perform an information processing method, the information processing method comprising:

obtaining first information, second information, third information, and fourth information, the first information being information about a position and orientation of the gripping means with respect to a part of the object, taught to grip the part, the second information being information about a symmetry, the third information being information about the position and orientation of the object to be gripped by the gripping means, the fourth information being information about vicinity objects in the vicinity of the object to be gripped by the gripping means; and

making a determination, based on the first to fourth information, on the possibility of gripping the object for the plurality of sets of position and orientation possible for the gripping means to take with respect to the object to be gripped by the gripping means based on the symmetry of the part of the object.

19. An article manufacturing method, comprising:

gripping and moving an object based on processing information obtained by an information processing method for determining possibility of gripping the object by a gripping means;
processing the moved object; and
manufacturing a product by using the processed object,
wherein the information processing method includes

obtaining first information, second information, third information, and fourth information, the first information being information about a position and orientation of the gripping means with respect to a part of the object, taught to grip the part, the second information being information about a symmetry, the third information being information about the position and orientation of the object to be gripped by the gripping means, the fourth information being information about vicinity objects in the vicinity of the object to be gripped by the gripping means; and

making a determination, based on the first to fourth information, on the possibility of gripping the object for a plurality of sets of position and orientation possible for the gripping means to take with respect to the object to be gripped by the gripping means based on the symmetry of the part of the object.

# FIG.1A

```
                          ┌─106
          ┌──────────────────────────────────┐
          │         PROCESSING UNIT           │
INPUT ──→ │   (GRIPPING POSSIBILITY           │ ──→ OUTPUT
          │     DETERMINATION UNIT)           │
          └──────────────────────────────────┘
```

# FIG.1B

# FIG.2A

201

# FIG.2B

202

# FIG.3A

# FIG.3B

# FIG.4

EP 3 385 038 A1

**SYMMETRY INFORMATION ID** [ 1 ]

**AMOUNTS OF MOVEMENT FROM WORK COORDINATE SYSTEM**

| | |
|---|---|
| AMOUNT OF TRANSLATIONAL MOVEMENT IN X-AXIS DIRECTION [mm] | 5 |
| AMOUNT OF TRANSLATIONAL MOVEMENT IN Y-AXIS DIRECTION [mm] | 0 |
| AMOUNT OF TRANSLATIONAL MOVEMENT IN Z-AXIS DIRECTION [mm] | 30 |
| AMOUNT OF ROTATIONAL MOVEMENT ABOUT X-AXIS [deg] | 0 |
| AMOUNT OF ROTATIONAL MOVEMENT ABOUT Y-AXIS [deg] | 0 |
| AMOUNT OF ROTATIONAL MOVEMENT ABOUT Z-AXIS [deg] | 0 |

**SYMMETRY ATTRIBUTE**

◉ ROTATIONAL SYMMETRY  ○ TRANSLATIONAL SYMMETRY

**AXIS OF SYMMETRY, NUMBER OF TIMES OF SYMMETRY, AND RANGE OF SYMMETRICAL SHAPE**

| AXIS OF SYMMETRY | NUMBER OF TIMES OF SYMMETRY | | | RANGE OF SYMMETRICAL SHAPE | |
|---|---|---|---|---|---|
| | INFINITE | FINITE | N TIMES | START | END |
| ☐ X'-AXIS | ○ | ○ | | | |
| ☐ Y'-AXIS | ○ | ○ | | | |
| ☑ Z'-AXIS | ◉ | ○ | ∞ | 0 | 360 |

**REGISTER**

# FIG.5

202

AXIS OF
SYMMETRY

201

**FIG.6**

# FIG.7

700

**WORK AND HAND INFORMATION**

GRIPPING INFORMATION   | GRIPPING METHOD 1 ▼ |
WORK NAME: WORK 1
HAND NAME: HAND 1

**MEASUREMENT PARAMETER SETTING VALUES**

| MEASUREMENT PARAMETER 1 | 1C |
| MEASUREMENT PARAMETER 2 | 2C |
| MEASUREMENT PARAMETER 3 | 3C |

**TEST START**

~702

**DEGREE OF FREEDOM OF GRIPPING POSITION AND ORIENTATION, AND GRIPPING POSSIBILITY DETERMINATION RESULTS**

601

-180     0     180

**HAND GRIPPING POSITION AND ORIENTATION TO DISPLAY**

602

-180   603   0   180

**DETAILS OF GRIPPING POSSIBILITY DETERMINATION RESULT OF ORIENTATION DISPLAYED**

| ORIENTATION CHECK | INTERFERENCE CHECK |
|---|---|
| OK | OK |

701

| PRIORITY | RECOGNITION SCORE | WORK POSITION INFORMATION (X, Y, Z) | WORK ORIENTATION INFORMATION (Rx, Ry, Rz) | GRIPPING POSSIBILITY DETERMINATION RESULT |
|---|---|---|---|---|
| 1 | 74.03 | 1570.40, 310.67, -336.86 | -0.76, -3.52, -1.02 | OK |
| 2 | 70.90 | 1569.68, 117.15, -338.42 | 0.08, -5.41, -1.41 | OK |
| 3 | 70.16 | 1571.82, 210.78, -372.74 | -1.18, -6.26, -0.46 | NG |
| … | … | … … … | … … … | … |

# FIG.8

START

S801
OBTAIN WORK MODEL
AND HAND MODEL

S802
SET SYMMETRY INFORMATION

S803
SET GRIPPING INFORMATION

S804
CALCULATE RECOGNITION POSITION-
AND-ORIENTATION OF WORK

S805
CALCULATE GRIPPING POSITIONS
AND ORIENTATIONS OF HAND

S806
PERFORM GRIPPING
POSSIBILITY DETERMINATION

S807
DISPLAY DEGREE OF FREEDOM
INFORMATION ABOUT GRIPPING
POSITIONS AND ORIENTATIONS

S808
SPECIFY HAND GRIPPING POSITION-
AND-ORIENTATION TO BE DISPLAYED
ON MODEL DISPLAY UNIT

S809
DISPLAY POSITION-AND-ORIENTATION
OF RECOGNIZED WORK AND GRIPPING
POSITION-AND-ORIENTATION OF HAND

END

# FIG.9

601

$\theta_{i-1}$        $\theta_i$        $\theta_{i+1}$

$\Delta\theta$        $\Delta\theta$        $\Delta\theta$

**FIG.10A**

0
1001
-90
90

**FIG.10B**

0
1002
-90
90

**FIG.10C**

0
1003
-90
90

# FIG.11A

Z'

X'

SYMMETRICAL SHAPE
COORDINATE SYSTEM

1101

Y'

Z

X

WORK COORDINATE
SYSTEM

Y

# FIG.11B

1102

-180          0          180

# FIG.12

SYMMETRY INFORMATION ID  [ 1 ]

AMOUNTS OF MOVEMENT FROM WORK COORDINATE SYSTEM

| | |
|---|---|
| AMOUNT OF TRANSLATIONAL MOVEMENT IN X-AXIS DIRECTION [mm] | 5 |
| AMOUNT OF TRANSLATIONAL MOVEMENT IN Y-AXIS DIRECTION [mm] | 0 |
| AMOUNT OF TRANSLATIONAL MOVEMENT IN Z-AXIS DIRECTION [mm] | 30 |
| AMOUNT OF ROTATIONAL MOVEMENT ABOUT X-AXIS [deg] | 0 |
| AMOUNT OF ROTATIONAL MOVEMENT ABOUT Y-AXIS [deg] | 0 |
| AMOUNT OF ROTATIONAL MOVEMENT ABOUT Z-AXIS [deg] | 0 |

SYMMETRY ATTRIBUTE

○ ROTATIONAL SYMMETRY    ◉ TRANSLATIONAL SYMMETRY

Figure labels: Z', X', Y', SYMMETRICAL SHAPE COORDINATE SYSTEM, RANGE OF SYMMETRICAL SHAPE, 1201, Z, X, Y, WORK COORDINATE SYSTEM

AXIS OF SYMMETRY, NUMBER OF TIMES OF SYMMETRY, AND RANGE OF SYMMETRICAL SHAPE

| AXIS OF SYMMETRY | NUMBER OF TIMES OF SYMMETRY | | | RANGE OF SYMMETRICAL SHAPE | |
|---|---|---|---|---|---|
| | INFINITE | FINITE | N TIMES | START | END |
| ☐ X'-AXIS | ○ | ○ | | | |
| ☐ Y'-AXIS | ○ | ○ | | | |
| ☑ Z'-AXIS | ◉ | ○ | ∞ | -10 | 10 |

REGISTER

EP 3 385 038 A1

# FIG.13

START

S1301

OBTAIN WORK MODEL
AND HAND MODEL

S1302

SET SYMMETRY INFORMATION

S1303

SET GRIPPING INFORMATION

S1304

CALCULATE RECOGNITION POSITION-
AND-ORIENTATION OF WORK

S1305

CALCULATE GRIPPING POSITIONS
AND ORIENTATIONS OF HAND

S1306

PERFORM GRIPPING
POSSIBILITY DETERMINATION

S1307

SPECIFY PARAMETER ABOUT EITHER
ONE OF DEGREES OF FREEDOM OF
GRIPPING POSITION-AND-ORIENTATION

S1308

PRESENT INFORMATION ABOUT
THE OTHER DEGREE OF FREEDOM
DEPENDENT ON SPECIFIED PARAMETER

S1309

SPECIFY HAND GRIPPING POSITION-
AND-ORIENTATION TO BE DISPLAYED
ON MODEL DISPLAY UNIT

S1310

DISPLAY POSITION-AND-ORIENTATION
OF RECOGNIZED WORK AND GRIPPING
POSITION-AND-ORIENTATION OF HAND

END

FIG.14

# FIG.15

```
                    ┌──────────┐
                    │  START   │
                    └──────────┘
                         │                    ⌐S1501
        ┌────────────────▼────────────────┐
        │      OBTAIN WORK MODEL          │
        │       AND HAND MODEL            │
        └────────────────┬────────────────┘
                         │                    ⌐S1502
        ┌────────────────▼────────────────┐
        │    SET SYMMETRY INFORMATION     │
        └────────────────┬────────────────┘
                         │                    ⌐S1503
        ┌────────────────▼────────────────┐
        │     SET GRIPPING INFORMATION    │
        └────────────────┬────────────────┘
                         │                    ⌐S1504
        ┌────────────────▼────────────────┐
        │  CALCULATE RECOGNITION POSITION-│
        │    AND-ORIENTATION OF WORK      │
        └────────────────┬────────────────┘
                         │                    ⌐S1505
        ┌────────────────▼────────────────┐
        │   CALCULATE GRIPPING POSITIONS  │
        │    AND ORIENTATIONS OF HAND     │
        └────────────────┬────────────────┘
                         │                    ⌐S1506
        ┌────────────────▼────────────────┐
        │  SPECIFY PARAMETER ABOUT EITHER │
        │   ONE OF DEGREES OF FREEDOM OF  │
        │ GRIPPING POSITION-AND-ORIENTATION│
        └────────────────┬────────────────┘
                         │                    ⌐S1507
        ┌────────────────▼────────────────┐
        │   PERFORM GRIPPING POSSIBILITY  │
        │     DETERMINATION ON GRIPPING   │
        │     POSITIONS AND ORIENTATIONS  │
        │ DEPENDENT ON SPECIFIED PARAMETER│
        └────────────────┬────────────────┘
                         │                    ⌐S1508
        ┌────────────────▼────────────────┐
        │    PRESENT INFORMATION ABOUT    │
        │   THE OTHER DEGREE OF FREEDOM   │
        │ DEPENDENT ON SPECIFIED PARAMETER│
        └────────────────┬────────────────┘
                         │                    ⌐S1509
        ┌────────────────▼────────────────┐
        │  SPECIFY HAND GRIPPING POSITION-│
        │  AND-ORIENTATION TO BE DISPLAYED│
        │       ON MODEL DISPLAY UNIT     │
        └────────────────┬────────────────┘
                         │                    ⌐S1510
        ┌────────────────▼────────────────┐
        │ DISPLAY POSITION-AND-ORIENTATION│
        │ OF RECOGNIZED WORK AND GRIPPING │
        │ POSITION-AND-ORIENTATION OF HAND│
        └────────────────┬────────────────┘
                         │
                    ┌────▼─────┐
                    │   END    │
                    └──────────┘
```

# FIG.16

# FIG.17

_1701_

0   ▼

_1702_

-180                                    0                                    180

_1704_

-180                                    0                                    180

_1703_

# FIG.18A

SECOND SYMMETRICAL
SHAPE COORDINATE
SYSTEM

Z"

X"

Y"

Z'

X'

Y'

FIRST SYMMETRICAL
SHAPE COORDINATE
SYSTEM

1801

# FIG.18B

Z"

X"

Y"

Z'

X'

Y'

1801

SECOND SYMMETRICAL
SHAPE COORDINATE
SYSTEM

FIRST SYMMETRICAL
SHAPE COORDINATE
SYSTEM

# FIG.19

```
┌─────────────┐
│    START    │
└─────────────┘
       │
       ▼                                    ╭─S1901
┌──────────────────────────────────────────────┐
│      OBTAIN WORK MODEL AND HAND MODEL          │
└──────────────────────────────────────────────┘
       │                                    ╭─S1902
       ▼
┌──────────────────────────────────────────────┐
│           SET SYMMETRY INFORMATION             │
└──────────────────────────────────────────────┘
       │                                    ╭─S1903
       ▼
┌──────────────────────────────────────────────┐
│   CALCULATE NEW SYMMETRICAL SHAPE COORDINATE   │
│    SYSTEMS BASED ON SYMMETRY INFORMATION       │
└──────────────────────────────────────────────┘
       │                                    ╭─S1904
       ▼
┌──────────────────────────────────────────────┐
│           SET GRIPPING INFORMATION             │
└──────────────────────────────────────────────┘
       │                                    ╭─S1905
       ▼
┌──────────────────────────────────────────────┐
│      CALCULATE RECOGNITION POSITION-           │
│         AND-ORIENTATION OF WORK                │
└──────────────────────────────────────────────┘
       │                                    ╭─S1906
       ▼
┌──────────────────────────────────────────────┐
│      CALCULATE GRIPPING POSITIONS              │
│        AND ORIENTATIONS OF HAND                │
└──────────────────────────────────────────────┘
       │                                    ╭─S1907
       ▼
┌──────────────────────────────────────────────┐
│  PERFORM GRIPPING POSSIBILITY DETERMINATION    │
└──────────────────────────────────────────────┘
       │                                    ╭─S1908
       ▼
┌──────────────────────────────────────────────┐
│      SPECIFY PARAMETER ABOUT EITHER            │
│      ONE OF DEGREES OF FREEDOM OF              │
│    GRIPPING POSITION-AND-ORIENTATION           │
└──────────────────────────────────────────────┘
       │                                    ╭─S1909
       ▼
┌──────────────────────────────────────────────┐
│  PRESENT RANGE OF POSITIONS AND ORIENTATIONS   │
│ THAT HAND CAN TAKE AND CORRESPONDING GRIPPING  │
│     POSSIBILITY DETERMINATION RESULTS          │
└──────────────────────────────────────────────┘
       │                                    ╭─S1910
       ▼
┌──────────────────────────────────────────────┐
│ SPECIFY HAND GRIPPING POSITION-AND-ORIENTATION │
│    TO BE DISPLAYED ON MODEL DISPLAY UNIT       │
└──────────────────────────────────────────────┘
       │                                    ╭─S1911
       ▼
┌──────────────────────────────────────────────┐
│      DISPLAY POSITION-AND-ORIENTATION          │
│     OF RECOGNIZED WORK AND GRIPPING            │
│    POSITION-AND-ORIENTATION OF HAND            │
└──────────────────────────────────────────────┘
       │
       ▼
┌─────────────┐
│     END     │
└─────────────┘
```

# FIG.20

2000

SYMMETRY INFORMATION ID [ 2 ]

☑ SPECIFY SYMMETRY INFORMATION ID TO DEPEND ON

SYMMETRY INFORMATION ID TO DEPEND ON [ 1 ▾ ]

AMOUNTS OF MOVEMENT FROM WORK COORDINATE SYSTEM

| | |
|---|---|
| AMOUNT OF TRANSLATIONAL MOVEMENT IN X-AXIS DIRECTION [mm] | 20 |
| AMOUNT OF TRANSLATIONAL MOVEMENT IN Y-AXIS DIRECTION [mm] | 0 |
| AMOUNT OF TRANSLATIONAL MOVEMENT IN Z-AXIS DIRECTION [mm] | 5 |
| AMOUNT OF ROTATIONAL MOVEMENT ABOUT X-AXIS [deg] | 0 |
| AMOUNT OF ROTATIONAL MOVEMENT ABOUT Y-AXIS [deg] | 0 |
| AMOUNT OF ROTATIONAL MOVEMENT ABOUT Z-AXIS [deg] | 0 |

SYMMETRY ATTRIBUTE

◉ ROTATIONAL SYMMETRY    ◯ TRANSLATIONAL SYMMETRY

1801

AXIS OF SYMMETRY, NUMBER OF TIMES OF SYMMETRY, AND RANGE OF SYMMETRICAL SHAPE

| AXIS OF SYMMETRY | NUMBER OF TIMES OF SYMMETRY | | N TIMES | RANGE OF SYMMETRICAL SHAPE | |
|---|---|---|---|---|---|
| | INFINITE | FINITE | | START | END |
| ☐ X'-AXIS | ◯ | ◯ | | | |
| ☑ Y'-AXIS | ◯ | ◉ | 4 | 0 | 360 |
| ☐ Z'-AXIS | ◯ | ◯ | | | |

REGISTER

EP 3 385 038 A1

# FIG.21

2102

2101

-180   0   180

2103

-180   0   180

2105

2104

-180   0   180

# FIG.22A

SECOND SYMMETRICAL SHAPE COORDINATE SYSTEM

FIRST SYMMETRICAL SHAPE COORDINATE SYSTEM

2201

# FIG.22B

2201

# FIG.23

START

S2301
OBTAIN WORK MODEL AND HAND MODEL

S2302
SET SYMMETRY INFORMATION

S2303
CALCULATE NEW SYMMETRICAL SHAPE COORDINATE SYSTEMS BASED ON SYMMETRY INFORMATION

S2304
SET GRIPPING INFORMATION

S2305
CALCULATE RECOGNITION POSITION-AND-ORIENTATION OF WORK

S2306
CALCULATE GRIPPING POSITIONS AND ORIENTATIONS OF HAND

S2307
PERFORM GRIPPING POSSIBILITY DETERMINATION

S2308
SPECIFY PARAMETER ABOUT FIRST DEGREE OF FREEDOM OF GRIPPING POSITION-AND-ORIENTATION

S2309
SPECIFY PARAMETER ABOUT SECOND DEGREE OF FREEDOM OF GRIPPING POSITION-AND-ORIENTATION

S2310
PRESENT RANGE OF POSITIONS AND ORIENTATIONS THAT HAND CAN TAKE AND CORRESPONDING GRIPPING POSSIBILITY DETERMINATION RESULTS

S2311
SPECIFY HAND GRIPPING POSITION-AND-ORIENTATION TO BE DISPLAYED ON MODEL DISPLAY UNIT

S2312
DISPLAY POSITION-AND-ORIENTATION OF RECOGNIZED WORK AND GRIPPING POSITION-AND-ORIENTATION OF HAND

END

# FIG.24

EP 3 385 038 A1

# FIG.25

2501

CPU

2500

2502

ROM

2504

INPUT I/F

2503

RAM

2505

OUTPUT I/F

# FIG.26

2680

DISPLAY
UNIT

2670

CONTROL
UNIT

2600

2610

2605

2620

2690

# FIG.27

**WORK AND HAND INFORMATION**

GRIPPING INFORMATION [ GRIPPING METHOD 1 ▼ ]
WORK NAME: WORK 1
HAND NAME: HAND 1

**MEASUREMENT PARAMETER SETTING VALUES**

MEASUREMENT PARAMETER 1 [ 1C ]
MEASUREMENT PARAMETER 2 [ 2C ]
MEASUREMENT PARAMETER 3 [ 3C ]

[ **TEST START** ]

| PRIORITY | RECOGNITION SCORE | WORK POSITION INFORMATION (X, Y, Z) | WORK ORIENTATION INFORMATION (Rx, Ry, Rz) | GRIPPING POSSIBILITY DETERMINATION RESULT |
|---|---|---|---|---|
| 1 | 74.03 | 1570.40, 310.67, -336.86 | -0.76, -3.52, -1.02 | OK |
| 2 | 70.90 | 1569.68, 117.15, -338.42 | 0.08, -5.41, -1.41 | OK |
| 3 | 70.16 | 1571.82, 210.78, -372.74 | -1.18, -6.26, -0.46 | NG |
| … | … | … … … | … … … | … |

EP 3 385 038 A1

# FIG.28

HAND

WORK

Europäisches
Patentamt

European
Patent Office

Office européen
des brevets

# EUROPEAN SEARCH REPORT

Application Number

EP 18 16 2477

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/127162 A1 (GOTOU TAKEFUMI [JP]) 7 May 2015 (2015-05-07) * paragraphs [0009], [0010], [0033], [0034], [0044] - [0047], [0052] - [0053]; figures 1-8 * | 1-19 | INV. B25J9/16 |
| A | US 2013/211593 A1 (DOMAE YUKIYASU [JP] ET AL) 15 August 2013 (2013-08-15) * paragraphs [0008], [0032], [0038]; figure 3 * | 1,15,18 | |
| A | US 2013/054025 A1 (ITO YOSHINORI [JP]) 28 February 2013 (2013-02-28) * paragraphs [0013], [0036] - [0040] * | 1,15,18 | |

TECHNICAL FIELDS
SEARCHED     (IPC)

B25J
G05B

The present search report has been drawn up for all claims

| Place of search | Date of completion of the search | Examiner |
|---|---|---|
| The Hague | 7 August 2018 | Salvador, Didier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 16 2477

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2018

| Patent document cited in search report | | Publication date | Patent family member(s) | | Publication date |
|---|---|---|---|---|---|
| US 2015127162 | A1 | 07-05-2015 | CN 104608126 A<br>DE 102014016033 A1<br>JP 5788460 B2<br>JP 2015089589 A<br>US 2015127162 A1 | | 13-05-2015<br>07-05-2015<br>30-09-2015<br>11-05-2015<br>07-05-2015 |
| US 2013211593 | A1 | 15-08-2013 | CN 103221188 A<br>DE 112011103794 T5<br>JP 5558585 B2<br>JP WO2012066819 A1<br>KR 20130102080 A<br>US 2013211593 A1<br>WO 2012066819 A1 | | 24-07-2013<br>17-10-2013<br>23-07-2014<br>12-05-2014<br>16-09-2013<br>15-08-2013<br>24-05-2012 |
| US 2013054025 | A1 | 28-02-2013 | JP 5852364 B2<br>JP 2013043271 A<br>US 2013054025 A1 | | 03-02-2016<br>04-03-2013<br>28-02-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150142378 A